(19) Europäisches Patentamt
European Patent Office
Office européen des brevets

(11) **EP 2 966 197 A1**

(12) **EUROPEAN PATENT APPLICATION**
published in accordance with Art. 153(4) EPC

(43) Date of publication:
**13.01.2016 Bulletin 2016/02**

(51) Int Cl.:
**D01D 5/00** (2006.01)    **D01F 13/00** (2006.01)
**D01D 4/00** (2006.01)    **D01D 13/00** (2006.01)

(21) Application number: **14760081.1**

(22) Date of filing: **26.02.2014**

(86) International application number:
**PCT/KR2014/001586**

(87) International publication number:
**WO 2014/137097 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.03.2013 KR 20130025346**
**17.04.2013 KR 20130042244**
**17.04.2013 KR 20130042249**
**17.04.2013 KR 20130042251**
**18.07.2013 KR 20130084561**

(71) Applicant: **Finetex Ene, Inc.**
**Seoul 137-819 (KR)**

(72) Inventor: **PARK, Jong-Chul**
**Seoul 140-774 (KR)**

(74) Representative: **v. Bezold & Partner Patentanwälte - PartG mbB**
**Akademiestraße 7**
**80799 München (DE)**

(54) **ELECTROSPINNING APPARATUS**

(57)    The present invention relates to an electrospinning apparatus Capable of: reusing and recycling VOC, which is generated when a spinning solution jetted from the nozzle of a nozzle block in the electrospinning apparatus is laminating on an elongated sheet, and spinning solution which has overflowed without being nanofiberized by condensing and liquefying same and then adding the resulting products to the spinning solution.

The electrospinning apparatus's case lower side forms an electric conductor material and the upper side forms an electric insulator material, the case upper side insulating member for attaching a collector can be deleted, and thereby simplifying the overall configuration of the electrospinning apparatus. Producing complementary and advanced nanofiber products by performing bottom-up and top-down electrospinning in one process; expanding the filtering area of a filter medium when fabricating same with nanofiber by forming corrugation on the produced filter medium; and consequently ensuring the improved filtering area of the filter medium and therby improving the performance of the filter medium and simultaneously prolonging the lifespan thereof.

FIG.6

## Description

## Technical Field

The present invention relates to an electrospinning apparatus, and more particularly to reusing and recycling VOC (Volatile Organic Compounds) which occurs in the spinning process of electrospinning apparatus overflow spinning solution and jet of spinning solution, forming elector spinning apparatus case mixed with electric conductor material and electric insulator material enables delete of insulation member in the case, optimizes a case thickness and the distance between a case and a collector enables stable mass-production of nanofiber web, alternately installing bottom-up and top-down electrospinning method to produce nanofiber with different polymer and diameter, forming corrugation in manufactured filter medium to enhance efficiency of filter medium.

## Background Art

Generally, Nano Fiber refers to a Micro Fiber having an average diameter of tens to hundreds nm, products consist of nanofiber such as non-woven fabric, membrane, and braid are widely used as consumer goods, agricultural, clothing, and industrial ways.

Moreover, nanofiber is used in various fields such as artificial leather, suedette, sanitary pads, clothing, diapers, packing materials, general goods materials, various filter materials, medical use materials in gene transporting, bulletproof jacket, and other national defense use materials. As stated above, nanofiber is produced by electric field. In other words, nanofiber applies polymer substance which is raw material to high voltage electric field occurring electric repulsive force inside polymer substance, so molecular agglomerate, split into nano size thread, and nanofiber is manufactured and produced.

In this case, as the stronger electric field is, polymer substance can be thinly torn, 10 to 1000nm thickness of nanofiber can be acquired.

The electrospinning apparatus which manufactures and produces nanofiber with such thickness comprises a spinning solution main tank filling spinning solution, a metering pump for the required amount of spinning solution, a nozzle block with several nozzles arranged and installed to discharge spinning solution, and a collector located at the bottom of nozzle integrated spinning fiber and a power supply device generating voltage.

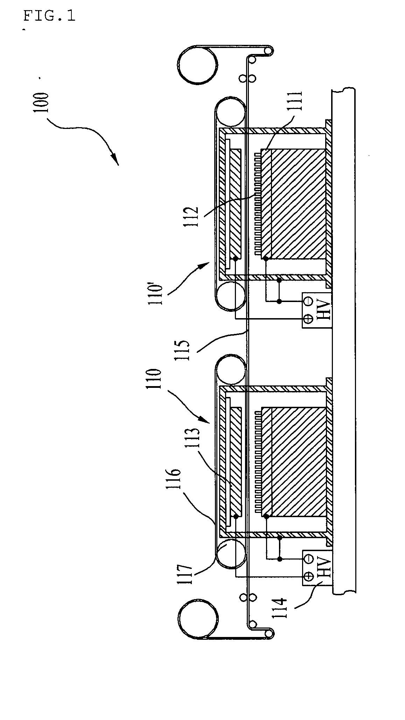

The electrospinning apparatus made up of the structure is illustrated in FIG. 1, a spinning solution main tank(not shown) filled spinning solution, a metering pump(not shown)which is for the required amount of supply on polymer spinning solution inside the spinning solution main tank, discharging polymer spinning solution inside the spinning solution main tank, a nozzle comprises pin form(112) locates below several arranged and installed the nozzle block(111) and the nozzle(112) in order to integrate polymer spinning solution jetted comprises as the unit(110) including the collector(113) which has predetermined space separated from the nozzle(112) and the power supply device(114) generating high voltage at the collector(113).

Nanofiber manufacturing method by the electrospinning apparatus(100), consecutively supplies the required amount of spinning solution inside the spinning solution main tank by metering pump into several nozzles(112) provided high voltage, spinning solution supplied by the nozzle(112) spins and lined-focused through the nozzle(112) on the collector(114) with high voltage forming a nano fiber web, an elongated sheet carried by the electrospinning apparatus's(100) units(110) forms the nanofiber web, the elongated sheet which laminating formed the nanofiber web passes through each unit(110) repeatedly laminates the nanofiber web and produces non-woven fiber by laminating, embossing, or needle punch.

In this case, the elongated sheet is carried by a belt(116) driving by its feed roller(117) rotation.

Here, the electrospinning apparatus is divided into a bottom-up electrospinning apparatus, a top-down electrospinningdevice, and a parallel electrospinning apparatus by the located direction on a collector. In other words, the electronicspinning apparatus is divided into a bottom-up electrospinning apparatus which a collector is located on the top part of a nozzle and can produce equal and relatively thick nano fiber, a top-down electrospinning device which a collector is located on the bottom part of the nozzle, produce relatively thick nanofiber, and can increase the production of nanofiber per hour, and a parallel electrospinning apparatus which comprises nozzles arranged in horizontal direction.

As stated above, the bottom-up electrospinning apparatus has the advantage of producing equal and relatively thin nanofiber, on the other hand, the disadvantage is that when manufacturing the productivity decreases as nanofiber is fined-sized. A top-down electrospinning apparatus has the advantage of producing nanofiber with relatively thick diameter, and can increase the productivity of nanofiber per unit time, while the disadvantage is that effect of electric force decreases as spinning solution is consecutively supplied by a nozzle with high voltage.

In addition, a parallel electrospinning device has the disadvantage of difficulty in arranging and spinning several nozzles. In other words, in order to mount nozzle and nozzle plate which includes spinning solution in horizontal direction with collector a nozzle located on the uppermost line, a nozzle located on the undermost line, and a collector should be arranged in tip-to-collector distance, however as arranging a nozzle and a collector in tip-to-collector distance is difficult, so there is a problem that only limited number of nozzles can be arranged, as limited number of nozzles in a certain space can be arranged there is a problem of difficulty in mass production of products needed for commercialization.

Because of this, we are in the state of requiring electronic spinning apparatus which enables the nanofiber mass production and consecutive production, has electronical stability, restrains a droplet phenomenon and the mass produce nanofiber with spinning stability.

Meanwhile, as stated above, nanofiber produced by an electrospinning apparatus is made into products such as non-woven fabric, membrane, and braid widely used as agricultural, clothing, and industrial ways. Moreover, nanofiber is used in various fields such as artificial leather, suedette, sanitary pads, clothing, diapers, packing materials, general goods materials, various filter materials, medical used materials in gene transporting, bulletproof jacket, and other national defense used materials.

When such electricity, electronic or food and beverage and pharmaceuticals etc. apply nanofiber manufactured by an electrospinning apparatus as filter medium used as filter material, it carries filter process from fluid material used in various industries as product material and impurities and foreign body.

Such filter includes a depth filtering type filter which is in-depth filtering filter and screen filter which is surface filtering filter, filter medium applied to each filter is mounted in mechanically stable filtering structure when gas or liquid passes through filter medium, it provides excellent filtering capability, high particle capturing capability, and minimum flow limit efficiency.

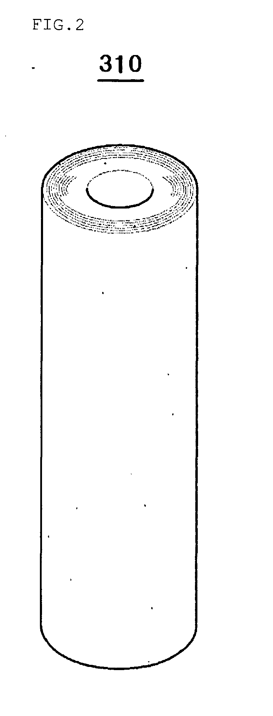

Here, as illustrated in FIG. 2 the depth filtering type filter comprises composition of collecting solid matter among fluid inside a filter, and winding non-woven fabric which is filter medium into cylinder form.

In this case, the depth filtering type filter(310) is made up of structure winding filter medium simply to cylinder form limiting filter medium's filtering area, this results in low flow rate to be filtered.

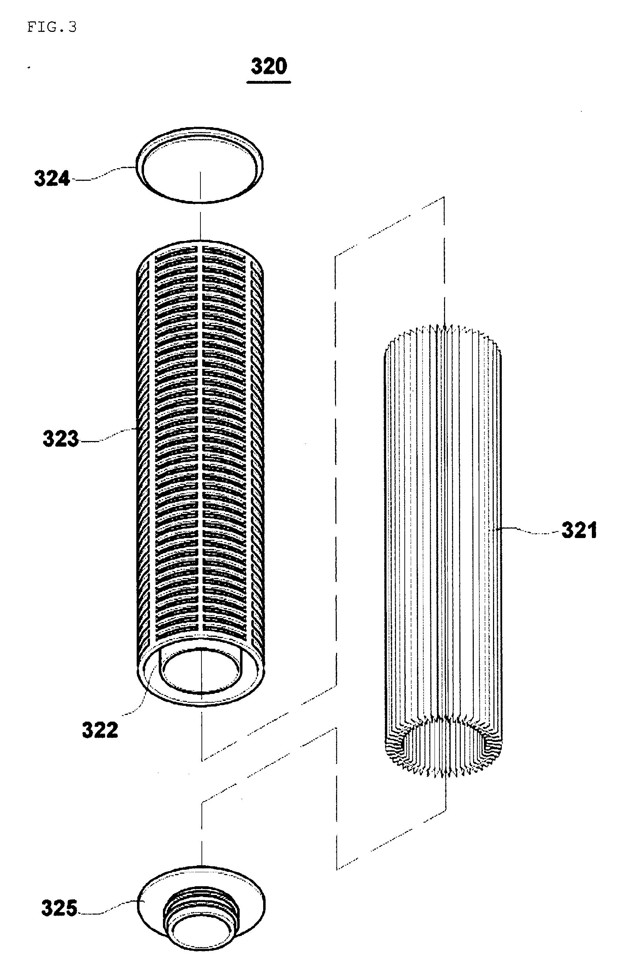

Meanwhile, the screen filter(320) as illustrated in FIG. 3 comprises composition of, bending with a bending machine of the filter medium(321), in state of sheet comprises synthetic resins such as polypropylene, after injecting between an injection core(322) and an injection case(323), and melting compress top, bottom both ends of an injection end cap(324,325) However, the screen filter requires a process of bending the filter medium with the bending machine, requires the injection core, the injection case, and the injection end cap, since these components have to be manufactured in a separate injection process, there are problems in its complication of manufacturing process and higher unit cost of production. Meanwhile, the electrospinning apparatus comprises composition of jet spinning solution by a nozzle block's nozzle, and jetted spinning solution laminates on upper side or lower side of an elongated sheet forming a nanofiber web.

By the composition of the electrospinning apparatus inside which one unit jets spinning solution by a nozzle carrying the elongated sheet which laminating forms a nanofiber web to the inside of a different one unit, the elongated sheet which is carried to the inside of a different one unit jets spinning solution by the nozzle and again laminating forming a nanofiber, by repeatedly performing the process produces a nanofiber.

Here, spinning solution which jets by a nozzle of the nozzle block comprises polymer and solvent.

In this case, when jetting spinning solution by a nozzle of the nozzle block, polymer included in spinning solution laminates and forms on the elongated sheet forming a nanofiber web, solvent included in spinning solution volatilizes because of high voltage occurring on an electrospinning apparatus, and vaporizes VOC(Volatile Organic Compounds). Although, it spins through the nozzle, there are problems that it can't be fiberized and because of overflowing polymer the usage of raw material increases.

As stated above, VOC occurring when jetting spinning solution by an electrospinning apparatus is a carcinogenic toxic chemical, a material which generates air pollution, a cause matter of global warming, the object of regulation material according to the Enforcement Decree of Clean Air Conservation Act.

Like this, suggested a method of eliminating VOC by burning it to handle VOC which occurs when jetting spinning solution from an electrospinning apparatus, except a method of eliminating VOC by simply burning it, we are in the state of rising necessity of reusing and recycling methods.

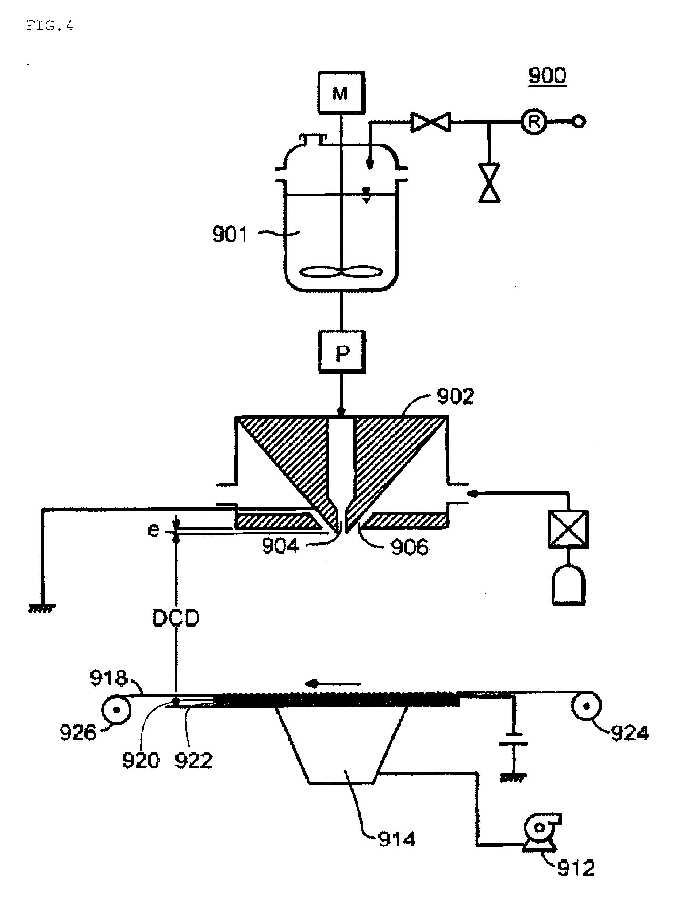

Meanwhile, when the electrospinning apparatus comprises the top-down electrospinning apparatus, as illustrated in FIG. 4, the electrospinning apparatus(900) includes a spinning nozzle(904) discharging polymer solution stored in a spinning solution main tank(901) and a gas nozzle(906) forming flow of gas, provided with a nozzle block(902), a collector(920) composed of conductive element, a supply roll(924) which is for carrying collection basic substance(918) and winding roll(926), and provided with a air blower(912), a vacuum chamber(914), and a support member(922).

As stated above, the top-down electrospinning apparatus(900) applies negative high voltage to the collector(920) simultaneously in the state of grounded the nozzle block(902) by discharging polymer solution from the spinning nozzle(904), electrospinning carried nanofiber on the collection basic substance(918).

In addition, starting from the nozzle block(902) from polymer solution before discharging from the spinning nozzle(904), a storage tank(901) filling polymer solution, and the storage tank filling polymer solution to the nozzle block(902) carrying polymer solution carrying device etc. all components are ground-potential, the storage tank(901) and a polymer solution carrying device don't need high-potential voltage specification. Therefore, the electrospinning apparatus(900) whole composition can avoid to be complicated because of the high-potential voltage specification of the storage tank(901), polymer solution carrying device.

Moreover, the electrospinning apparatus(900) applies high voltage to the collector(920) forming relatively simple shape and structure simultaneously because it electro spins the nozzle block(902), with relatively complicated shape and structure in the state of grounded, it is hard to generate inappropriate electric discharge or voltage-drop, and it makes possible to electro spin always under the stable condition.

However, as the electrospinning apparatus is easy for not enough insulation between the collector, the case, and other members, in order to produce a nanofiber with desired function when extremely high voltage applied in voltage between a nozzle block and a collector, there could be insulation breakdown among a collector, a case, and other members, not only insulation breakdown, but also increasing to inappropriate levels of leak current is the problem.

Because of this, there are problems such as halt in operation of the electrospinning apparatus, difficulty in long time consecutive operation, and difficulty in the stable mass production of nanofiber with desirable efficiency.

## Disclosure

## Technical Problem

The present invention is contrived to solve the problems, the present disclosure is directed to providing an electrospinning apparatus of when laminating spinning solution which jets from a nozzle of the electrospinning apparatus nozzle block on the elongated sheet occurring VOC, condense and liquefy VOC, distill liquefied VOC, classify by types and evaporate, once again condense and liquefy each evaporated VOC, add to spinning solution, reuse and recycle, spinning solution which after spinning from a nozzle could not be nanofiberize and overflow, by using the overflow system to carry spinning solution to a recycling tank, reuse and recycle, solvent in the required amount for spinning solution to use it as a solvent obtained through a VOC recycling system.

Also, the present invention provides in which forming an electrospinning apparatus's case lower side as an electric conductor material, forming the upper side as an electric insulator material, deleting insulating member inside the upper side of a case for attaching a collector, because of this the whole composition of the electrospinning apparatus for a nanofiber manufacture could be streamlined, installation cost and the whole cost can be reduced, by optimizing the case thickness and the distance between the case's inner surface and the collector's outer surface when applying high voltage between the nozzle block and the collector, it could prevent insulation breakdown between the case and the collector simultaneously prevents leak current increasing to a dangerous level, because of this the electrospinning apparatus for a nanofiber manufacture could be operated consecutively for a long period and simultaneously making it possible to stable mass production of a nanofiber web with desired functions. Moreover, the present invention provides in which, installed the bottom-up electrospinning apparatus and the top-down electrospinning apparatus alternatively and by jetting spinning solution alternatively makes it possible to manufacture each other different polymer or nanofiber with each other different diameter, it comprises the top-down and the bottom-up electrospinning apparatus in one process so it is complementary and manufacturing of advanced nanofiber products become possible, by forming corrugation on a manufactured filter medium when manufacturing a filter medium by nanofiber filtering area of filter medium could be expanded, so it is possible to acquire the filter medium's advanced filtering area which enhances the filter medium's function and simultaneously lengthens the filter medium span of life, through on manufactured nanofiber corrugation forming post-process and heat treatment post-process, by forming corrugation, nanofiber and the filter medium manufacture is consecutively in progress, in one process manufacturing only nanofiber or improvement in manufacturing process by forming corrugation on manufactured nanofiber and only producing a filter meidium, it aims to provide the electrospinning apparatus which enhances manufacture process and reduces unit cost of product.

## Technical Solution

In order to achieve the objects of the present invention, according to a preferred embodiment of the present invention, an electrospinning apparatus for production of nanofibers, comprises: a VOC(Volatile Organic Compounds) recycling system for reusing and recycling by condensing and distilling VOC which occurs from spinning solution jetting through nozzle installed in each unit of the electrospinning apparatus.

Here, the VOC recycling system comprises a condenser for condensing and liquefying VOC, a distiller for distilling and liquefying VOC which is condensed and liquefied through the condenser, and a solvent storage device for storing liquefied solvent from the distiller.

In this case, pipe for flowing an evaporated VOC occurred in the unit of the electrospinning apparatus to the condenser, pipe for flowing a liquefied VOC occurred in the condenser to the distiller, and pipe for carrying a liquefied VOC occurred in the distiller to the solvent storage device are provided with connected each other.

Also, VOC distilled in the distiller and liquefying by the evaporation temperature difference is classified by each solvent types and is stored in a storage tank in which each solvent is reused and recycled as a spinning solution of the electrospinning apparatus.

Meanwhile, according to a preferred embodiment of the present invention, an electrospinning apparatus for production of nanofibers, comprises: an overflow system which retrieves spinning solution which is not nanofiberized from spinning solution spun through a nozzle installed in each unit of the electrospinning apparatus and reuses and recycles the spinning solution as a raw material of nanofibers; and a VOC recycling system which reuses and recycles VOC occurred in electrospinning process by condensation and distillation, wherein the overflow system and the VOC recycling system are connected and simultaneously operated.

Here, tip of the nozzle is formed in divergent shape.

And, the overflow system comprises a spinning solution return path for retrieving nanofiber that is not nanofiberized, a storage tank for storing spinning solution which becomes raw material of the nanofiber, a recycling tank for recycling and storaging spinning solution carried through first feed pipe and is provided with at least one or more, a middle tank for storing spinning solution carried through second feed pipe from the storage tank or the recycling tank, wherein the VOC recycling tank comprises a condenser for condensing and liquefying VOC and a solvent storage device for storing VOC condensed through the condenser.

In this case, the VOC recycling system further comprises a distiller is located between the condenser and the solvent storage device and is for supplying liquefied VOC to the solvent storage device after distilling and liquefying VOC condensed through the condenser.

Also, the recycling tank has first sensor for measuring level of the retrieved spinning solution, and first feed control device which controls carrying movement of the first feed pipe according to level measured by the first sensor, the middle tank has second sensor for measuring level of the spinning solution, and second feed control device which controls carrying movement of the second feed pipe according to level measured by the second sensor.

Here, the recycling tank of the overflow system retrieves spinning solution and simultaneously measures solvent contents of the retrieved spinning solution, and according to the result of measurement, after distillation in the distiller of the VOC recycling system after distillation by the evaporation temperature difference, retrieves VOC solvent liquefied by the evaporation temperature difference, and adds the the required amount of VOC solvent to the recycling tank so that the VOC solvent is reused and recycled.

Meanwhile, according to a preferred embodiment of the present invention, an electrospinning apparatus comprising a case with conductivity, a collector attached to the case through an insulating member, a nozzle block with a plurality of nozzles which discharge polymer spinning solution and is opposed to the collector, a power supply device applying voltage between the nozzle block and the collector, of which one of plus terminal and minus terminal of the power supply device is connected to the collector, and the other is connected to the nozzle block and the case, so that product nanofibers through electrospinning, comprises: lower side of the case is formed with an electric conduction material, the upper side thereof is formed with an electric insulation material, and the upper inner side of the case is directly engaged with the collector, in which the thickness of the case and the distance between the inner side of the case and the outer side of the collector satisfy the below conditions (1) and (2),

(1) a≥6mm, a is the thickness of the case formed with an electric insulation material,
(2) a+b≥50mm, b is distance between inner side of the case formed with the electric insulation material and the outer side of the collector.

Preferably, a satisfies a≥8mm, and a and b satisfy a+b≥80mm. Here, the electric insulator material forming the case is made up of any one or more the selected from the group comprising polyamide, polyacetal, polycarbonate, modified polyphenylene ether, polybutyleneterephtalate, polyethyleneterephthalate, amorphous polyallylate, polysulfone, polyethersulfone, polyphenylene sulfide, polyetheretherketone, polyimide, polyetherimide, fluoride resin, liquid crystal polymer, polypropylene, high density polyethylene, and polyethylene.

Meanwhile, according to a preferred embodiment of the present invention, an hybrid electrospinning apparatus for production of nanofibers, comprises: a bottom-up electrospinning apparatus of which a collector occurring high voltage is located on upper side of nozzle; and a top-down electrospinning apparatus of which a collector occurring high voltage is located on lower side of nozzle, wherein the bottom-up electrospinning apparatus and the top-down electrospinning apparatus are installed alternatively and consecutively in horizontal direction.

Here, after the nanofiber is laminated on the lower side of elongated sheet on the collector by polymer spinning solution jetting from nozzle of the bottom-up electrospinning apparatus, the nanofibers are carried to the collector of the top-down electrospinning apparatus, and then the nanofibers are laminated on the upper side of elongated sheet by polymer spinning solution jetting from nozzle of the top-down electrospinning apparatus, and the process stated above is consecutively and repeatedly performed.

Moreover, the nanofiber with thin diameter formed by polymer solution jetting from the bottom-up electrospinning apparatus and the nanofiber with thick diameter formed by polymer solution jetting from the top-down electrospinning apparatus are consecutively and repeatedly laminated on both lower and upper sides of the elongated sheet.

In addition, the polymer spinning solution jetting from nozzle of the bottom-up electrospinning apparatus and the polymer spinning solution jetting from nozzle of the top-down electrospinning apparatus are the same kinds or two or more different kinds.

Meanwhile, according to a preferred embodiment of the present invention, an electrospinning apparatus for production of nanofibers, comporises: a filter medium manufacture device is located in the rear side of the electrospinning apparatus and produces a filter medium by forming of corrugation on nanofiber produced by electro spinning.

Preferably, the filter medium manufacture device is provided movably in each of the upper and lower side of the nanofiber, and the filter medium manufacture device comprises a pair of press roller composed of heating roller.

In this case, the pair of the press roller is formed with tooth shape-projections in predetermined spaced in circumferential direction on peripheral edge, and the projections are formed with any one of among triangle, trapezoid, wave, or quadrangle form.

As an alternative, the filter medium manufacture device is provided in the upper and lower sides of the nanofiber, and comprises upper and lower presses composed of heating press.

Here, the upper and lower presses are formed with mutually engageable protrusions in the lower and upper sides thereof, and the projections are formed with any one of among triangle, trapezoid, wave, or quadrangle form.

Meanwhile, according to a preferred embodiment of the present invention, a manufacturing process of filter medium using a filter medium manufacture device of electrospinning apparatus for production of nanofibers, comprises steps: step of electro spinning a spinning solution on elongated sheet locating on the upper side of the collector through nozzle in inside of each unit of the electrospinning apparatus(S10); step of producing nanofiber by laminating the electro spun spinning solution thereon(S20); step of inputting the nanofiber to the filter medium manufacture device(S30); step of forming corrugation on nanofiber inputted to the filter medium manufacture device(S40); and step of producing the filter medium by outputting the corrugated nanofiber(S50).

Here, in the case that the filter medium manufacture device is provided movably in the upper and lower sides of nanofiber and comprising a pair of press roller protruding with formed projection in peripheral edge, the manufacturing process further comprises step of forming corrugation that when the nanofiber is inputting, a pair of press rollers comprising a heating roller is rotated and tooth-engaged with projection formed on peripheral edge, so that forms consecutively the corrugation in the length direction of nanofiber(S41).

Moreover, in the case that the filter medium manufacture device is provided comperessably in the upper and lower sides of nanofiber and comprising of upper and lower presses protruding with formed projection in upper and lower sides, the manufacturing process further comprises step of forming corrugation that when the nanofiber is inputting, upper and lower presses press and engage with the upper and lower sides of nanofiber comprising of a heating press, so that forms consecutively the corrugation in the length direction of nanofiber(S43).

**Advantageous Effects**

The present invention having the composition stated above, reusing and recycling VOC which is a harmful component simultaneously retrieving overflow spinning solution enables to reuse a nanofiber's raw material, enables to delete separate facility and device for eliminating and emitting VOC, enables to reduce cost in installation cost of facility and device. Also, it retrieves VOC occurring when laminating jetted spinning solution reuses and recycles simultaneously enables to reuse and recycle as solvent. Therefore, it reduces equipment management cost and usage amount of solvent, by consecutively reusing and recycling VOC which is harmful to human body and environment, it has effects of eco-friendly and enables to produce high quality nanofiber since droplet phenomenon doesn't occur.

Also, the present invention enables to delete an insulation member in upper side of a case inside for attaching collector, not only it streamlines the total composition of the electrospinning apparatus which manufactures nanofiber but also it reduces an installation cost and the total cost. When applying high voltage between a nozzle block and a collector, it prevents insulation breakdown between the case and the collector simultaneously prevents leak current increasing to a dangerous level. Moreover, long time consecutive operation is possible simultaneously stable mass production of nanofiber web with desired performance is possible. This not only increases productivity and production of nanofiber per hour but also enables to manufacture nanofiber according to a product feature.

Moreover, the present invention has effects of enabling to apply a variety of polymer according to the final product's feature which makes it possible to produce nanofiber with different polymer and different diameter. By simultaneously applying bottom-up and top-down electrospinning process, it enables to manufacture complementary and innovative nanofiber products, increases nanofiber production speed according to a product's feature. Moreover, by forming corrugation on a nanofiber and enlarging a filter medium's filtering area per unit, it enlarges the filter medium's filtering area, thereby it increases the filter medium performance and lifespan. Also, it enables various adjusts such as the filter medium corrugation's depth and interval which makes it possible to produce various products, thereby it increases the filter medium's dust holding capacity, makes it possible to increase in manufacture process and reduces product unit cost as consecutive manufacture is in progress in one process, increases a device operation convenience and the filter medium credibility, and enables to acquire enhanced filtering area.

**Brief Description of the Drawings**

FIG. 1 is a drawing schematically illustrating a bottom-up electrospinning apparatus according to the related art,

FIG. 2 is a drawing schematically depicting a depth filtering type filter according to the related art,

FIG. 3 is a view schematically showing a screen filter according to the related art,

FIG. 4 schematically illustrates a view of a top-down electrospinning apparatus according to the related art,

FIG. 5 schematically depicts a drawing of an electrospinning apparatus's VOC recycling system according to an exemplary embodiment of the present disclosure,

FIG. 6 is a drawing schematically showing an installation figure of VOC recycling system in an electrospinning apparatus according to an exemplary embodiment of the present disclosure,

FIG. 7 is a flowchart showing an electrospinning apparatus's VOC recycling system according to an exemplary embodiment of the present disclosure,

FIG. 8 schematically illustrates a drawing of an installation figure of an electrospinning apparatus's overflow system and a VOC recycling system according to an exemplary embodiment of the present disclosure,

FIG. 9 schematically illustrates a view of an installation figure of a distiller on an electrospinning apparatus's VOC recycling system according to an exemplary embodiment of the present disclosure,

FIG. 10 schematically depicts a view of mixture form of an electric conductor material and an electric insulator material on an electrospinning apparatus's case according to an exemplary embodiment of the present disclosure,

FIG. 11 depicts a view of enlarging an electrospinning apparatus collector and a case according to an exemplary embodiment of the present disclosure,

FIG. 12 is a side view schematically depicting a hybrid electrospinning apparatus according to an exemplary embodiment of the present disclosure,

FIG. 13 schematically illustrates a drawing of a nanofiber filter medium manufacture device consisting of a pair of press roller provided on an electrospinning apparatus according to an exemplary embodiment of the present disclosure,

FIG. 14 schematically depicts a view of operating process of a nanofiber filter medium manufacture device according to an exemplary embodiment of the present disclosure,

FIG. 15 schematically shows a nanofiber filter medium manufacture device consisting of a pair of press roller provided on an electrospinning apparatus according to an exemplary embodiment of the present disclosure,

FIG. 16 is another drawing schematically illustrating a nanofiber filter medium manufacture device comprising a pair of press roller provided on an electrospinning apparatus according to exemplary embodiment of the present disclosure,

FIG. 17 is a drawing schematically illustrating a nanofiber filter medium manufacture device comprising upper, lower press provided on an electrospinning apparatus according to exemplary embodiment of the present disclosure,

FIG. 18 is another drawing schematically illustrating a nanofiber filter medium manufacture device consisting of upper, lower press provided in an electrospinning apparatus according to exemplary embodiment of the present disclosure,

FIG. 19 is another drawing schematically illustrating a nanofiber filter medium manufacture device comprising upper, lower side press provided on an electrospinning apparatus according to exemplary embodiment of the present disclosure,

FIG. 20 is a block diagram showing a nanofiber filter medium manufacture process according to a nanofiber filter medium manufacture device according to exemplary embodiment of the present disclosure.

## Description of Reference Numbers of Drawings

1, 1', 1", 1''': electrospinning apparatus,
3: supply roller,
5: winding roller,
10, 10': unit,
10a: pipe,
11, 41, 110: nozzle block,
12, 42, 112: nozzle,
13, 43, 150: collector,
14, 160: power supply device,
15, 140: elongated sheet,
16: belt,
17: feed roller,
19, 49: spinning solution main tank,
27: nanofiber,
30, 300: VOC recycling system,
31, 310: condenser,
31a, 33a, 35a, 311, 321, 331, 332: pipe,
33, 320: distiller,
35, 33: storage device,
50: laminating device,
70: air permeability measuring device,
100, 100': unit,
102: case,
152: insulation member,
170: auxiliary belt device,
172: auxiliary belt,
174: auxiliary belt roller,
200: overflow system,
210: storage tank,
211: stirring apparatus
212, 213, 214: valve,
216: the second feed pipe,

218: the second feed control device,
220: middle tank,
222: the second sensor,
230: recycling tank,
231: stirring apparatus,
232: the first sensor,
233: valve,
240: supply pipe,
242: supply control valve,
250: spinning solution return path,
251: the first feed pipe,
410, 410': bottom-up electrospinning apparatus,
430, 430': top-down electrospinning apparatus,
530: filter medium manufacture device,
531a, 531a', 531b, 531b', 531c, 531d, 531d': press roller,
533a, 533a', 533b, 533b', 533c, 533c', 533d, 533d': projection
535a, 535b, 535c, 535d: upper side press,
535a', 535b', 535c', 535d': lower side press,
537a, 537a', 537b, 537b', 537c, 537c', 537d, 537d': protrusion
539: filter medium,
539a: corrugation.

## Detailed Description of the Preferred Embodiments

Below reference to a drawing attaching a desirable embodiment of the present disclosure and explains in detail. Also, the present embodiment doesn't limit the present disclosure extent of a right, but merely suggests an example, various modifications in the extent of not leaving the technological main point is possible.

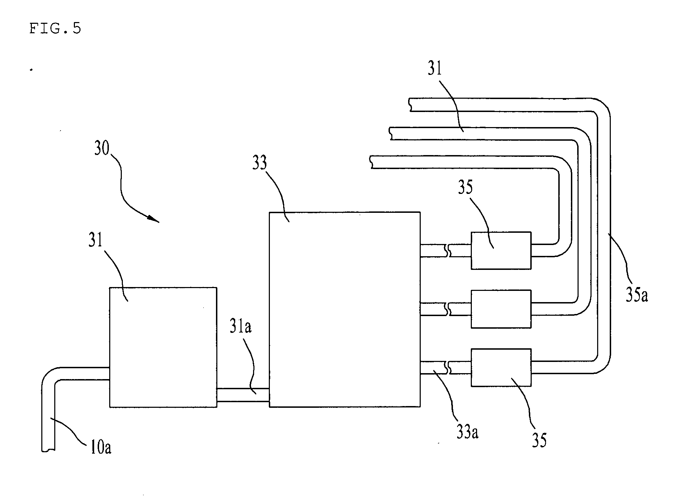

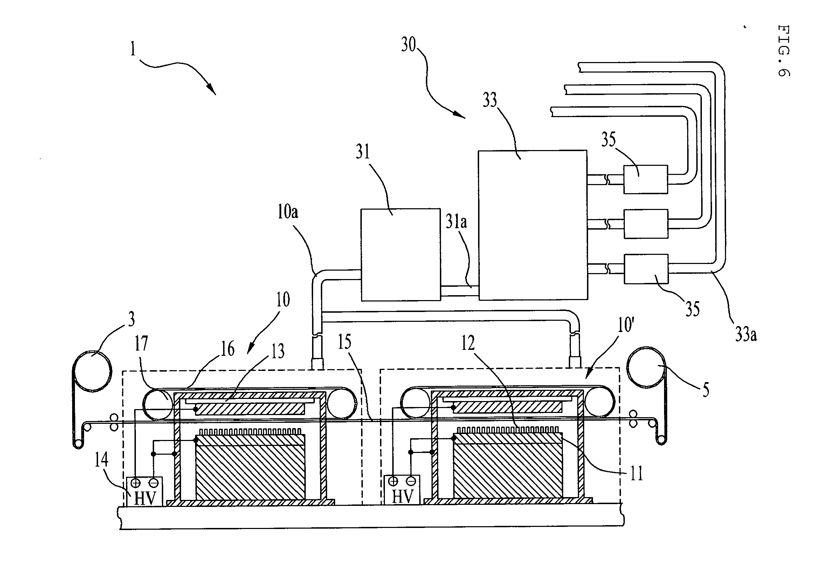

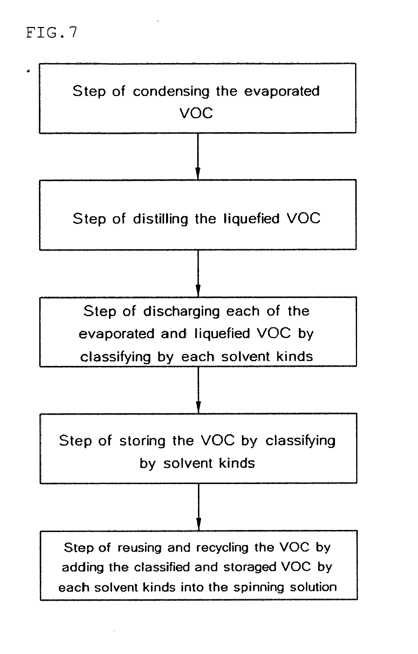

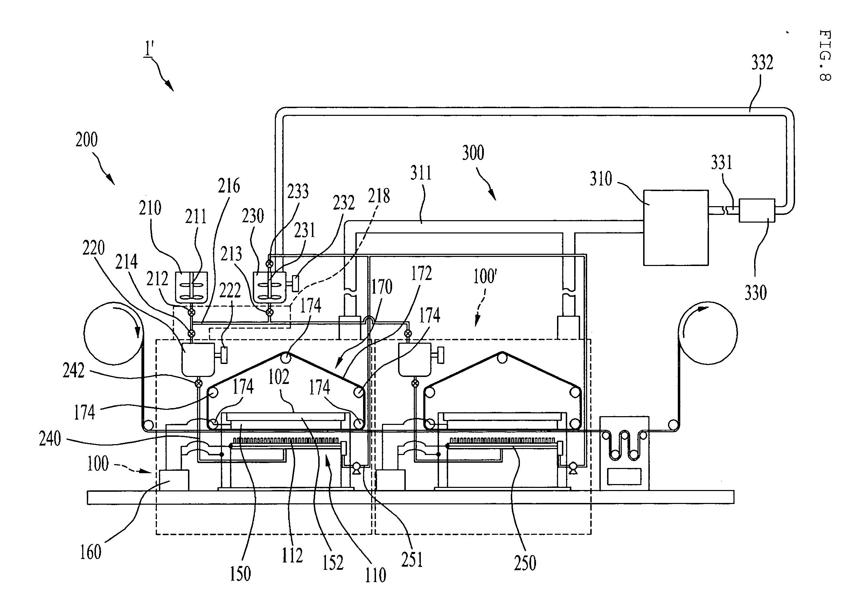

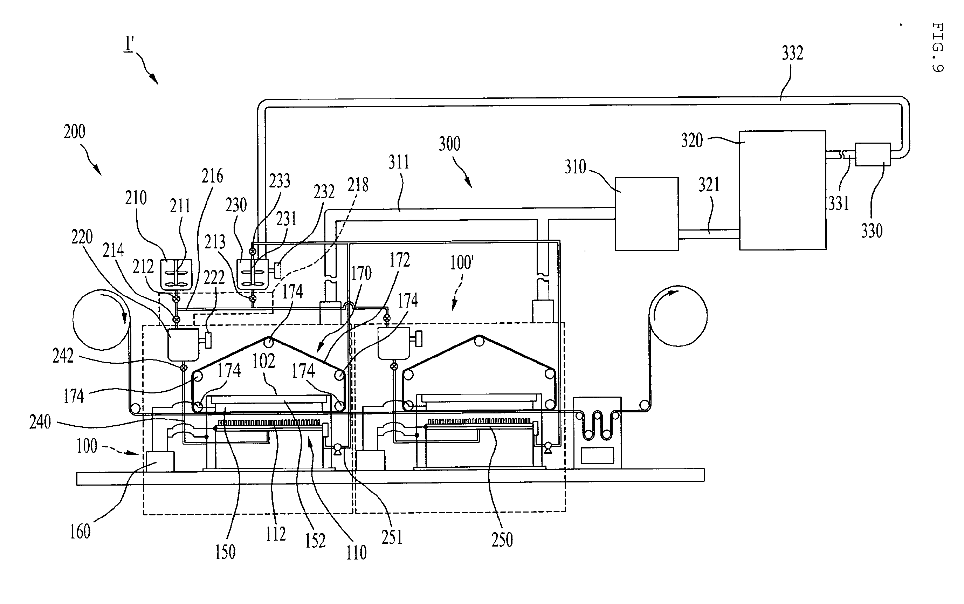

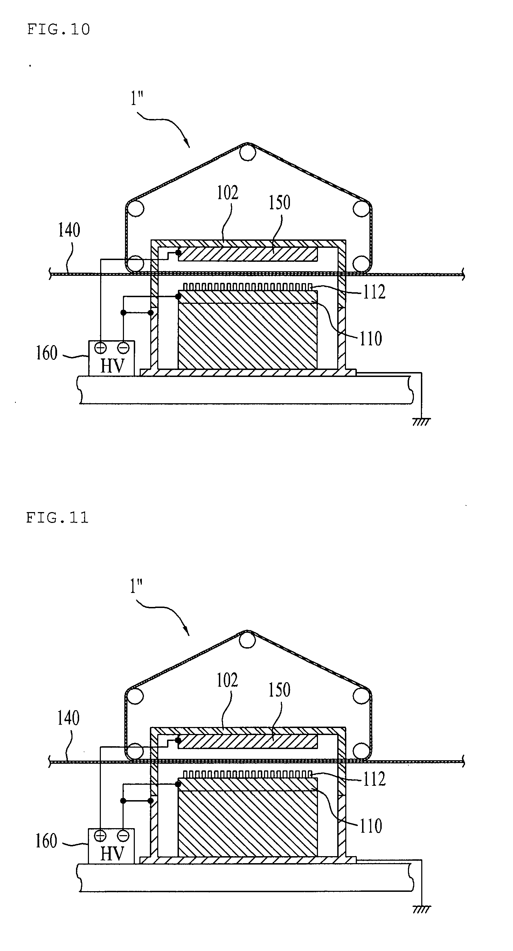

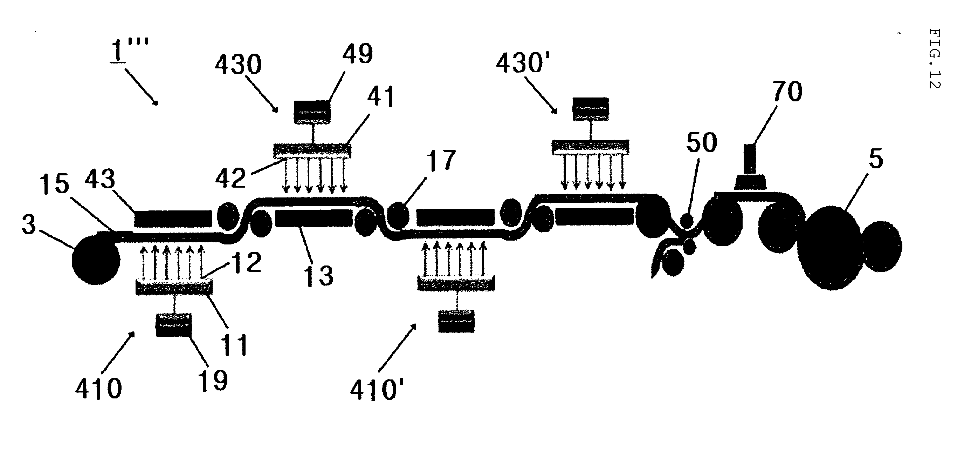

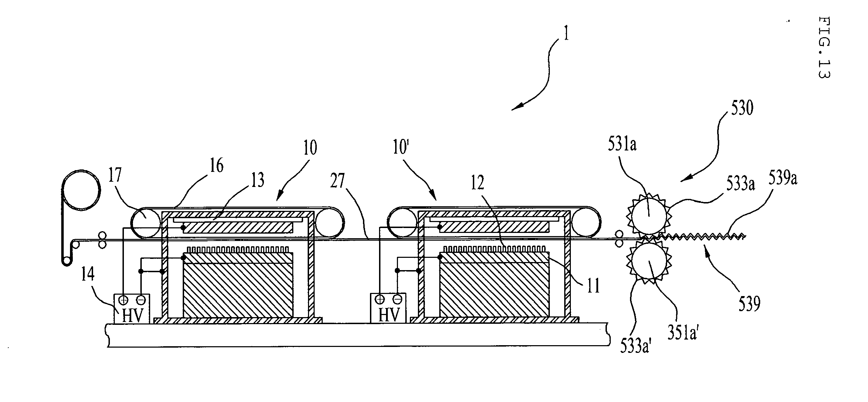

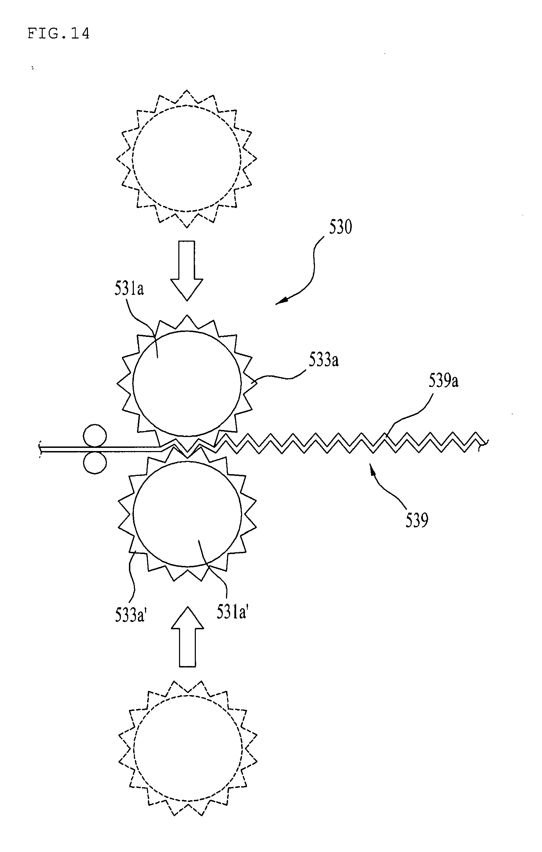

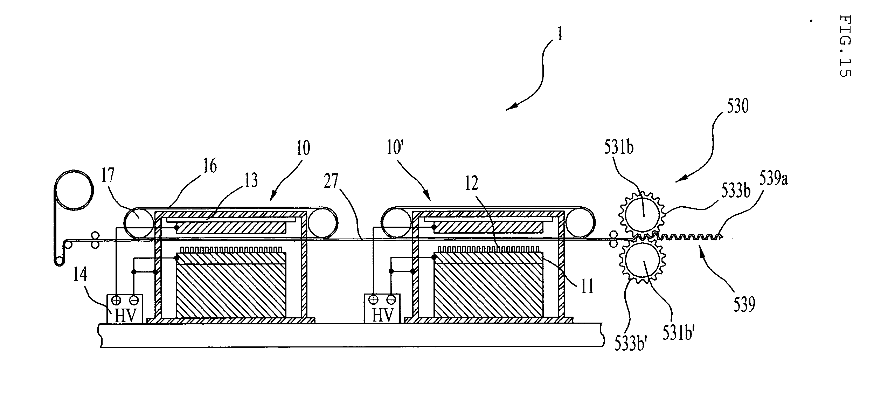

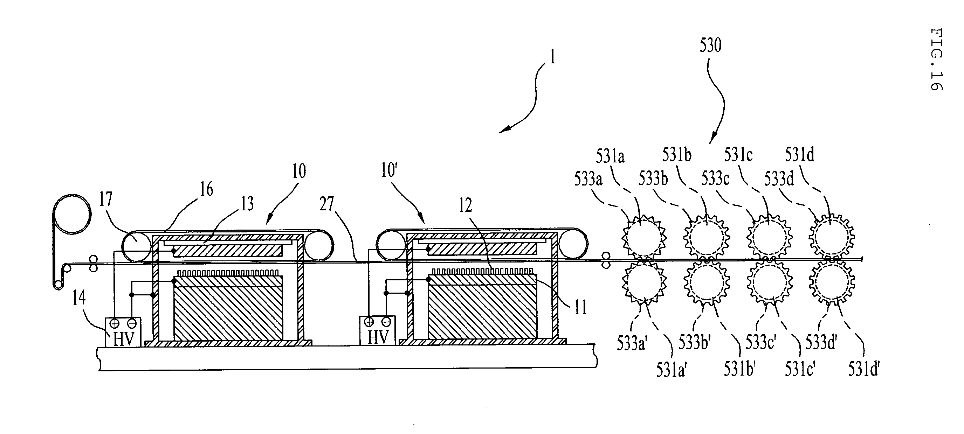

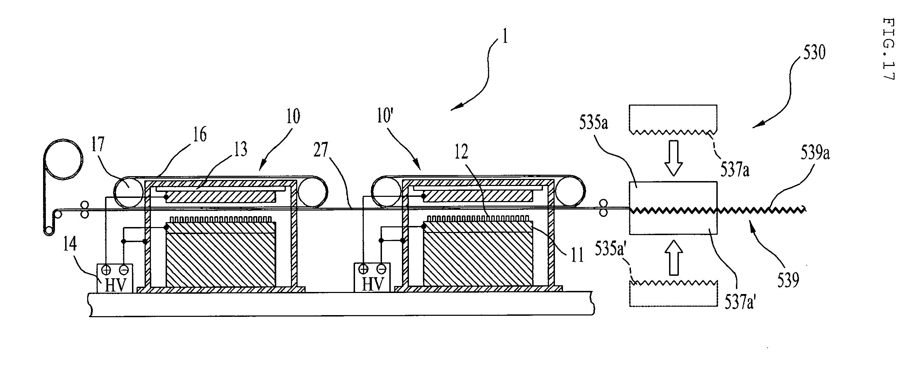

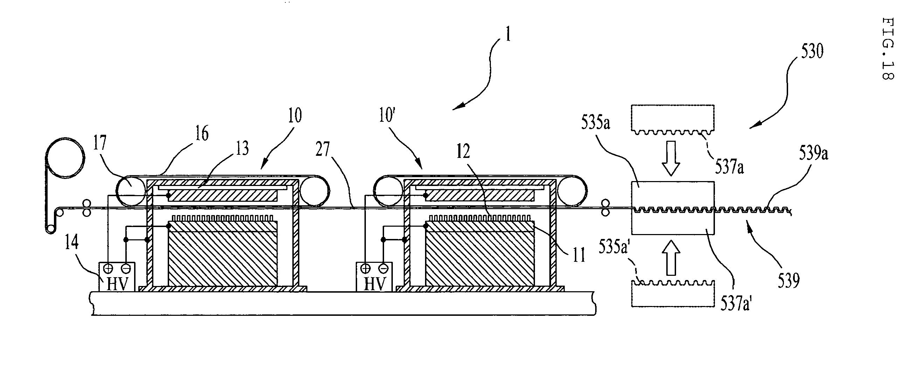

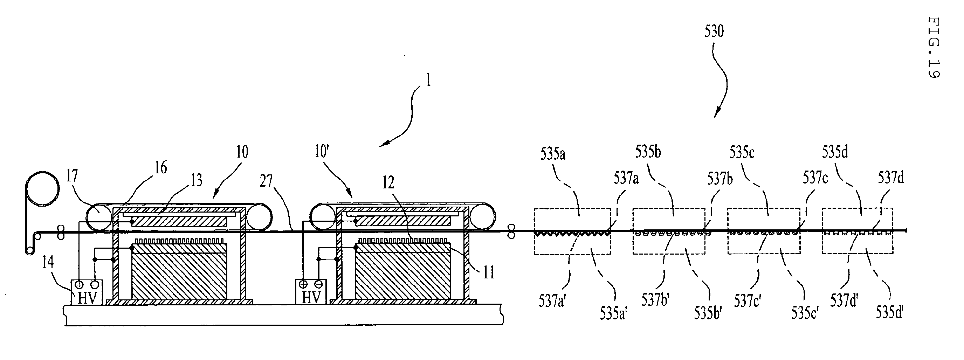

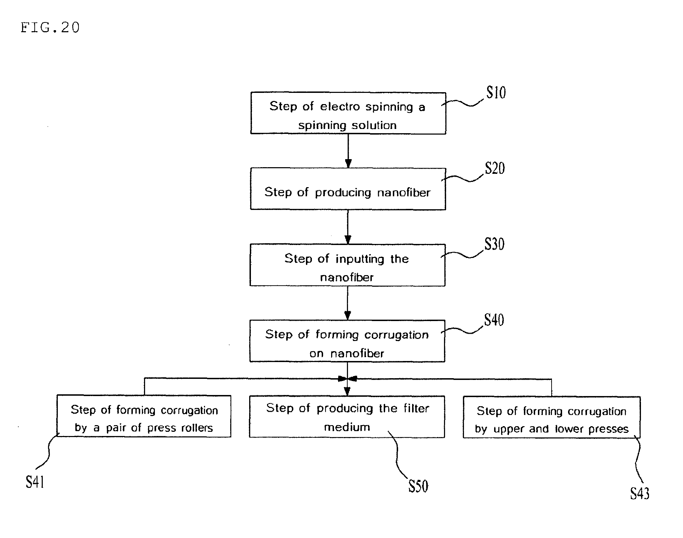

FIG. 5 schematically depicts a drawing of an electrospinning apparatus's VOC recycling system, FIG. 6 is a drawing schematically showing an installation figure of VOC recycling system in an electrospinning apparatus, FIG. 7 is a flowchart showing an electrospinning apparatus's VOC recycling system, FIG. 8 schematically illustrates a drawing of an installation figure of an electrospinning apparatus's overflow system and a VOC recycling system, FIG. 9 schematically illustrates a view of an installation figure of a distiller on an electrospinning apparatus's VOC recycling system, FIG. 10 schematically depicts a view of mixture form of an electric conductor material and an electric insulator material on an electrospinning apparatus's case, FIG. 11 depicts a view of enlarging an electrospinning apparatus collector and a case, FIG. 12 is a side view schematically depicting a hybrid electrospinning apparatus, FIG. 13 schematically illustrates a drawing of a nanofiber filter medium manufacture device comprising a pair of press roller provided in an electrospinning apparatus, FIG. 14 schematically depicts a view of operating process of a nanofiber filter medium manufacture device, FIG. 15 schematically shows a nanofiber filter medium manufacture device comprising a pair of press roller provided in an electrospinning apparatus, FIG. 16 is another drawing schematically illustrating a nanofiber filter medium manufacture device comprising a pair of press roller provided in an electrospinning apparatus, FIG. 17 is a drawing schematically illustrating a nanofiber filter medium manufacture device comprising upper, lower press provided in an electrospinning apparatus, FIG. 18 is another drawing schematically illustrating a nanofiber filter medium manufacture device comprising upper, lower side press provided in an electrospinning apparatus, FIG. 19 is another drawing schematically illustrating a nanofiber filter medium manufacture device comprising upper, lower press provided in an electrospinning apparatus, FIG. 20 is a block diagram showing a nanofiber filter medium manufacture process according to a nanofiber filter medium manufacture device.

As illustrated in the drawing, the electrospinning apparatus(1) according to the present invention comprises the VOC recycling system that condenses and distills VOC(Volatile Organic Compounds) which occurs during electrospinning, classifies VOC according to solvent type and after collecting for reusing and recycling.

Here, as illustrated in FIG. 5 to FIG. 7, the electrospinning apparatus(1) comprises a spinning solution main tank(not shown) which fills spinning solution inside, a metering pump(not shown) to supply the required amount of polymer spinning solution filled in the spinning solution main tank, a nozzle block(11) which arranges and installs several nozzles(12) with pin form and discharge spinning solution inside the spinning solution main tank, a collector(13) which is installed separately in predetermined space from the nozzle(12) to collect spinning solution jetted from the nozzle bock(11)'s nozzle(12) and a unit(10) containing inside a power supply device(14) which generates voltage from the collector(13). Meanwhile, spinning solution supplied through the nozzle(12) inside the unit(10) composed of solute and solvent, for solute is siloxane alone or siloxane and polymer including selected combination among monomethacrylate, vinyl, hydride, distearate, bis(1,2-hydroxymethyl), methoxy, ethoxylate, propoxylate, diglycidyl ether, monoglycidyl ether, monohydroxyalkyl, bishydroxyalkyl, chlorine, and bis((aminoethyl-aminopropyl)dimethoxysilyl)ether, and there are polypropylene(PP), polyethylene terephthalate(PET), polyvinylidene fluoride, nylon, polyvinyl acetate, polymethylmethacrylate acrylate, polyacrylonitrile(PAN), polyurethane(PUR), polybutylene terephthalate(PBT), polyvinylbutyral, polyvinyl chloride, polyethyleneimine, polyolefins, polylactic acid(PLA), polyvinyl acetate(PVAc), polyethylene naphthalate(PEN), polyamide(PA), polyvinyl alcohol(PVA), polyethyleneimide(PEI), polycaprolactone(PCL), polylactic acid glycidyl rolsan(PLGA), silk, cellulose, chitosan, etc. Among them polypropylene(PP) materials of material and thermal resistant polymer substance of polyamide, polyimide, polyamideimide, poly(meta-phenylene isophthalamide), polysulfone, polyether ketone, polyether imide , polyethylene terephthalate, polytrimethylene terephthalate, polyethylene naphthenate, etc such matters are aromatic polyester, polyphosphazene kinds such as polytetrafluoroethylene, polydiphenoxyposphazene, poly-bis [2-(2-methoxyethoxy) phosphazene], polyurethane copolymer including polyurethane and polyetherurethane, polymer such as cellulose acetate, cellulose acetate butyrate, cellulose acetate propionate, among groups one or more selected material is preferable to be composed of.

For solvent, phenol, formic acid, sulfuric acid, m- cresol, trifluoroacetic anhydride / dichloromethane, water, N-methylmorpholine N- oxide, chloroform, tetrahydrofuran, and an aliphatic ketone group such as methyl isobutyl ketone, methyl ethyl ketone, an aliphatic hydroxyl group such as m- butyl alcohol, isobutyl alcohol, isopropyl alcohol, methyl alcohol, ethanol, an aliphatic compound group such as hexane, tetrachlorethylene, acetone, a glycol group such as propylene glycol, a diethylene glycol, ethylene glycol, a halogen compound group such as trichlorethylene, dichloromethane, an aromatic compound group such as toluene, xylene, an alicyclic compound group such as cyclohexanone, cyclohexane, a ester group such as n- butyl acetate, ethyl acetate, an aliphatic ether group such as butyl cellosolve, acetic acid2-ethozyethanol, 2-ethoxyethanol, and an amide group such as dimethylformamide, dimethylcetamide, among groups one or more selected material is preferable to be made up of, and plural types of solvent can be mixed. It is possible to contain additives such as conductive improver in spinning solution.

The electrospinning apparatus(1) by the structure according to the present disclosure, spinning solution filled in the spinning solution main tank inside the unit(10) consecutively provides the required amount in the several nozzles(12) provided with high voltage through a metering pump, polymer's spinning solution provided by the nozzle(12) spins and collects on the collector(13) with high voltage flowing through the nozzle(12) and forms a nanofiber web(not shown), formed nanofiber web is laminating and produces non-woven fabric, filter, etc.

In this case, on the electrospinning apparatus's(1) collector(13) is provided with the elongated sheet(15) for preventing sagging and carrying a nanofiber web which is formed on the collector(13) when jetting spinning solution, the elongated sheet(15) is wound by the supply roller(3) which is provided on the one side of an electrospinning apparatus and the winding roller(5) provided on the other end.

In an embodiment of the present disclosure, polymer spinning solution is jetted on the elongated sheet(15) located on the collector(13) through the electrospinning apparatus(1) nozzle(12) and comprised forming a nanofiber web, it is possible that seperate supporter(not shown) is supplied on the elongated sheet(15), separate supply roller(not shown) is provided for providing the supporter, through the nozzle(12) spinning solution is jetted on the supporter to form a nanofiber web.

Here, the supporter laminating polymer spinning solution which is jetted from the electrospinning apparatus(1) the nozzle(12) is preferably comprising nonwoven fabric or fabric etc, but it is not limited to this.

Meanwhile, the collector(13) outer side is provided with the belt(16), the collector(13) both ends in the direction of length are each provided with a feed roller(17), the belt(16) drives by the feed roller's(17) rotation, by driving of the belt(16) the elongated sheet(15) is carried from the front of the electrospinning apparatus(1) to the rear.

According to the structure, spinning solution filed in the inside of the electrospinning apparatus(1) unit's spinning solution main tank is jetted on the collector's(13) elongated sheet(15) by the nozzle(12), as spinning solution jetted on the elongated sheet(15) is laminated and forms a nanofiber web, the elongated sheet(15) is carried by the belt(16) driving by the feed roller(17) rotation provided with on both ends of the collector(13) and located inside another unit(10'), by repeatedly performing the process a final production is produced.

In this case, the nozzle block's(11) nozzle's(12) outlet is formed in the upward direction, the collector(13) is located in the upper side of the nozzle block(11) and spins spinning solution in the upward direction. In the embodiment of the present invention, the electrospinning apparatus(1) is composed of a bottom-up electrospinning apparatus which spins spinning solution in the upward direction, but it is also possible to comprise a top-down electrospinning apparatus which spins spinning solution in the downward direction.

Here, the VOC recycling system is connected and installed to the electrospinning apparatus's(1) each unit(10, 10'), inside the unit(10, 10') through the nozzle(12) VOC occurred during spinning solution spinning is condensed and distilled and it is reused and recycled.

For this, the VOC recycling system(30) comprises a condenser which is for condensation and liquefaction of VOC in evaporation state which is emitted through each unit, a distiller which distills and liquefies VOC which is condensed and liquefied by the condenser(31), and the storage device(35) for storing liquefied solvent through the distiller(33).

In other words, the VOC recycling system is made up of the condenser(31) which condenses and liquefies by supplying air and cooling water to evaporated VOC which is emitted through unit(10, 10'), the distiller(33) which heats condensed and liquefied VOC through the condenser(31) and after making it in evaporation state, cooling it again and make it into liquefaction state, and the storage device(35) for storing liquefied solvent which is by the distiller(33).

Here, the condenser(31) is preferably comprising water cooling, evaporative, or air cooling condenser, the distiller is preferably comprising a fractional distillation device, but it is not limited to this.

Meanwhile, VOC in evaporation state which is occurred in each of the unit (10, 10') flows into the condenser(31), VOC in liquefaction state which is occurred from the condenser(31) flows into the distiller(33), and the pipes(10a, 31a, 33a) are each connected and installed for storing VOC in liquefaction state occurred from the distiller(33) to the storage device(35).

In other words, the pipes(10a, 31a, 33a) are each connected and installed for mutual connection of each of the unit (10, 10') and the condenser(31), the condenser (31) and the distiller(35), the distiller(35) and the storage device(35).

In this case, the distiller (33) is connected to the condenser(31), VOC in liquefaction state which is composed of various types of solvent is heated on a high temperature heat and evaporates, cooling this again and classifies each VOC by solvent kinds, which is successively liquefied according to the evaporation temperature difference, in other words, the boiling point difference, after VOC is liquefied, it is supplied to the storage device(35).

In other words, VOC inside each of the units (10, 10') of the electrospinning apparatus(1) occurs during spinning, when VOC comprising various kinds of solvent mixed condenses and liquefies by the condenser(31) and supplies to the distiller(33), VOC comprising various types of mixed solvent successively evaporates by high temperature heat because of the difference in the boiling point, each VOC which is evaporated is classified by solvent kinds and liquefies, VOC in liquefaction state is supplied to the storage device(35). For this, one or more pipes(33a) are provided to connect the distiller(33) and the storage device(35), laminating installed in vertical direction, classified according to solvent through each pipe(33a), and liquefied VOC is supplied to the storage device(35).

In this case, one or more storage device(35) are provided for storing liquefied VOC which is classified by each solvent type. Here, the storage device(35) is preferably to comprise many pieces for storing each VOC in liquefaction state which is classified according to solvent, it is made up of one storage device(35), the inside is comprising one or more division composition, and it is possible to be composed of storing each VOC.

By the above structure, from solvent with low boiling point to solvent with high boiling point are vaporized and evaporated in order. In this case, solvent with lower boiling point is vaporized in sequence vaporized and liquefied VOC is emitted from pipe provided in the upward direction to pipe provided in the downward direction, and supplied to the storage device(35).

Therefore, VOC in liquefaction state which is provided to each of the storage device(35) is supplied again to the electrospinning apparatus's(1) spinning solution main tank through the pipe(35a), added to spinning solution, reused and recycled.

The statement below explains the electrospinning apparatus's(1) operation process according to the present invention.

First, according to the present invention through the electrospinning apparatus's(1) front provided supply roller(3), the elongated sheet(15) is supplied to the electrospinning apparatus's(1) unit(10).

Thus, the elongated sheet(15) which is supplied to the electrospinning apparatus's(1) unit(10) through the supply roller(3) is located on the collector(13), the power supply device's(14) high voltage is occurred on the collector(13) through the nozzle(12), polymer spinning solution filling in spinning solution main tank(not shown) is jetted on the elongated sheet(15) which is on the collector(13) occurring high voltage through the nozzle block's(11) nozzle.

Here, spinning solution filled in the spinning solution main tank is consecutively supplied the required amount in many nozzles(12) provided high voltage through the metering pump(not shown), spinning solution supplied to each of the nozzle(12) is spun and line-focused on the collector(13) applied high voltage through the nozzle(12), jetted on the elongated sheet(15) and laminating formed a nanofiber web.

As stated above, the elongated sheet(15) which laminating a nanofiber web the unit(10) located in the front among the electrospinning apparatus's(1) each unit(10, 10') is carried from the unit (10) which is located on the front side by the feed roller(17) operated by the motor's(not shown) driving and belt(16) driving by rotation of the feed roller(17) to the unit(10') located on the rear, as the process is repeated a nanofiber web is laminating formed on the elongated sheet(15).

In this case, VOC in evaporation state which is occurred when jetting on spinning solution's elongated sheet(15) through the nozzle(12) is discharged to the condenser(31) through the pipe(10a), VOC in evaporation state which is emitted to the condenser is condensed and changes to liquefaction state.

In other words, VOC in evaporation state which is occurred in the electrospinning apparatus(1) each of the unit(10, 10') and emitted to the condenser(31) is cooled and condensed inside the condenser(31) by cooling methods such as water cooling, air cooling, or evaporative and changes to liquefaction state. Thus, through the condenser(31) after liquefying condensed VOC in liquefaction state, it moves the VOC in liquefaction state to the distiller(33) and distills it.

Here, VOC in liquefaction state which is moved to the distiller(33) is successively evaporated according to the boiling point difference by high temperature heat, each evaporated VOC is separated and classified by solvent types, liquefied and emitted.

In this case, VOC in liquefaction state which is distilled through the distiller(33) is vaporized and evaporated in sequence of solvent with low boiling point to solvent with high boiling point. In this case, solvent with lower boiling point is vaporized in sequence vaporized and liquefied VOC is emitted from the pipe provided in the upward direction to the pipe provided in the downward direction, and supplied to the storage device(35).

Thus, VOC comprising various kinds of mixed solvent is classified according to solvent, during the emission it is classified according to each solvent and stored to each storage device(35), solvent stored in the storage device(35) classified by each of the solvent is again adding solvent to spinning solution, reused and recycled.

The electrospinning apparatus(1) according to the present invention reuses and recycles harmful component VOC and it does not require a separate discharging device for eliminating and discharging VOC, by this it can repeatedly reuse and recycle VOC which is harmful to human body and environment.

Meanwhile, in embodiment according to the present disclosure, the electrospinning apparatus(1) is provided with single VOC recycling system(30), as illustrated in FIG. 8 to FIG. 9, the electrospinning apparatus is provided with the VOC recycling system(300) and the overflow system(200) and spinning from the electrospinning apparatus(1'), by reusing spinning solution which isn't nanofiberized simultaneously VOC occurred during spinning is condensed and distilled, after collecting as solvent, reused and recycled it.

For this, the electrospinning apparatus(1') comprises each unit(100, 100') containing inside the case(102), the nozzle block(110), the collector(150), the power supply device(160), and the auxiliary belt(170); the overflow system(200) comprising the storage tank(210), the second feed pipe(216), the second feed control device(218), the middle tank(220), and the recycling tank(230); and the VOC recycling system comprising the condenser which is connected and installed on each of the unit(100, 100') for condensing and liquefying VOC occurred during spinning solution's spinning inside the unit(100, 100') through the nozzle(112) and the storage device(330) which is for storing solvent that is liquefied through the condenser(310).

it is for condensing and liquefying VOC occurred during spinning solution's spinning inside the unit(100, 100') through the nozzle(112), and the VOC recycling system comprising the storage device(330) which is for storing solvent that is liquefied through the condenser(310).

In this case, the case(102) is preferably comprising an electric conductor material, the case may be possibly composed of an electric insulator material, and it is also possible to be composed of other various materials.

In the embodiment, the nozzle block(110) comprises the nozzle(112) arranged and installed in bottom-up and many pieces, and it receives supply from the middle tank(220). Also, the nozzle's(112) tip cylinder is preferable to comprise cut form along the cylinder axis and plain obliquely crossed, it is also possible for some nozzle's(112) tip provided on the nozzle block(110) is formed in divergent shape. Moreover, the collector(150) is arranged upper side of the nozzle block(110), and it is attached to the case(102) through the insulating member(152). In this case, the power supply device(160) applies high voltage between nozzles(112) which are arranged and installed in bottom-up of a lot of pieces and the collector(150), the power supply device(160) plus terminal is connected to the collector(150), and the power supply device(160) minus terminal is connected to the nozzle block(110) though the case(102). The nozzle block's(110) spinning solution is in upward direction toward the collector(150) from an outlet, nanofiber which is manufactured through the nozzle(112) discharging nanofiber is deposited on the elongated sheet(not shown), maintaining an even thickness and moves. Meanwhile, the collector's(150) outer side is provided with an auxiliary belt device(170), the auxiliary belt device comprises the auxiliary belt moving and rotating in the carrying speed of the elongated sheet, an auxiliary belt roller(174) which assists rotation of the auxiliary belt(172), an auxiliary belt driving device(not shown) for the auxiliary belt driving. In this case, the auxiliary belt roller(174) is preferably rotating the auxiliary belt(172) by the auxiliary belt driving device, when using a roller with low friction factor it is possible to assist the elongated sheet carrying with no separate driving device.

Here, the overflow system's(200) storage tank(210) provided in the electrospinning apparatus(1') storages spinning solution that is the raw material of nanofiber, spinning solution inside the storage tank(210) is separated, and a stirring apparatus(211) for preventing coagulation is provided. The second feed pipe(216) comprises pipes connected to the storage tank(210) or the recycling tank(230) and the valve(212, 213, 214), spinning solution is carried from the storage tank(210) or the recycling tank(230) to the middle tank(220). The second feed control device(218) by controlling the second feed pipe's(216) valve(212, 213, 214) controls carrying movement of the second feed pipe(216), the valve(212) controls spinning solution carry from the storage tank(210) to the middle tank(220), the valve(213) controls spinning solution carry from the recycling tank(230) to the middle tank(220), the valve(214) controls the amount of spinning solution flowing from the storage tank(210) and the recycling tank(230) to the middle tank(220).

The control method is preferably controlling according to the spinning solution level measured by the second sensor(222) provided in the middle tank(230).

The middle tank(220) stores spinning solution supplied from the storage tank(210) or the recycling tank(230), provides spinning solution to the nozzle block(110), provided with the second sensor that measures provided spinning solution level, the second sensor(222) which is capable of measuring levels, for example, light sensor or infrared sensor is preferable. Here, the middle tank (220) lower side is provided with the supply pipe(240) providing spinning solution to the nozzle block(110) and the supply control valve(242), the supply control valve(242) controls supply movement of the supply pipe (240).

The recycling tank(230) stores spinning solution which is overflew and retrieved, its inside has the stirring apparatus(231) for preventing spinning solution separation and coagulation, provided with the first sensor(232) measuring level of retrieved spinning solution, the first sensor is preferably consisting of sensor enables measuring level, for example light sensor or infrared sensor is preferable. Meanwhile, overflow spinning solution from the nozzle block(110) is retrieved through the spinning solution return path(250) provided on the nozzle block(110) lower side, the spinning solution return path(250) retrieves spinning solution through the first feed pipe(251) to the recycling tank(230). Here, the first feed pipe(251) is provided with a pipe connected to the recycling tank(230) and a pump, spinning solution is carried by the pump electric power from the spinning solution return path(250) to the recycling tank(230).

In this case, the recycling tank (230) is preferably one or more, in the case of two or more, the first sensor (232) and the valve(233) are preferably provided with many pieces, if the recycling tank(230) is provided two or more, the valve(233) located on the recycling tank(230) upper side is provided with many pieces. According to this, by the first feed control device(not shown) controlling two or more valves(233) located on the upper side according to the first sensor(232) level provided in the recycling tank, it controls spinning solution carrying to which one recycling tank among many pieces of recycling tanks.

Meanwhile, the VOC recycling system(330) provided on the electrospinning apparatus(1') is explained above in detail, below is explained schematically.

The VOC recycling system(300) supplies air and cooling water to evaporated VOC which is discharged thorough each of the unit(100, 100') through the condenser(310) and condenses and liquefies it, through the condenser(310) condensed VOC is stored to the storage device(330).

Here, the condenser(310) is preferable comprising water cooling, evaporative, air cooling condensation device, but it is not limited to this.

Meanwhile, each of the unit (100, 100') is each connected and installed to the pipe(311, 331), flows in VOC in evaporation state which is occurred in each of the unit (100, 100') to the condenser(310), and stores VOC in liquefaction state occurred from the condenser(310) to the storage device(330). In other words, each of the unit (100, 100') and the condenser (310) are mutually connected, and the pipe(311, 331) is each connected and installed for mutual connection to the condenser(310) and the storage device(330).

The embodiment consisting structure of after condensing VOC through the condenser(310), condensed VOC in liquefaction state is provided to the storage device(330), as illustrated in FIG. 7, between the condenser (310) and the storage device (330) through the condenser (310) in the case of one or more solvent is applied as more distiller(220) for distilling and liquefying condensed VOC are provided, it is possible consisting of separating and classifying each solvent.

Here, the distiller(320) is connected to the condenser(310), evaporates VOC in liquefaction state by heating high temperature heat, again cooling this, and liquefied VOC is supplied to the storage device(330).

In this case, the VOC recycling system(300) evaporated VOC emitted through each of the unit(100, 100') supplies air and cooling water through the condenser(310), condenses and liquefies, through the condenser(310) condensed VOC is heated and made into evaporation state by the distiller(320), again cooling and make into liquefaction state, through the distiller(320) liquefied VOC is stored in the storage device(330).

Here, the distiller(320) is preferably consisting of a fractional distillation device, but it is not limited to this.

In this case, mutually connecting each of the unit(100, 100') and the condenser(310) simultaneously the pipe(311, 321, 331) for mutually connecting the condenser(310) and the distiller(320), the distiller(320) and the storage device(330) are each connected and installed.

Meanwhile, spinning solution which is overflew and retrieved to the recycling tank(230) measures solvent contents, the measurement extracts sample among the recycling tank's(230) spinning solution, and it implements by analyzing the sample. Analysis of spinning solution can be carried out by the method that is already known, based on the measured result, the required amount of solvent, VOC in liquefaction state supplied to the storage device is provided to the recycling tank(230) through the pipe(332). In other words, liquefied VOC is provided to the recycling tank(230) of the required amount according to the measurement result, and as solvent it is reused and recycled.

As stated above, the electrospinning apparatus(1') according to the embodiment operates in bottom-up electrospinning apparatus and doesn't occur droplet phenomenon happening in top-down electrospinning apparatus, because of this manufacture of high quality of nanofiber is possible, because by retrieving overflow spinning solution reusing nanofiber's raw material is possible so raw material and raw material cost can be reduced, therefore the total manufacture cost of nanofiber is reduced.

Moreover, by reusing and recycling harmful component VOC, it enables to delete separate facility and device for eliminating and discharging VOC, because of this, facility and device installation can be reduced, by retrieving, reusing, and recycling VOC occurred during spinning, equipment operation cost and the amount of solvent used can be reduced, it doesn't discharge VOC which is harmful to human body and environment, by reusing and recycling it can attain eco-friendly effects. Meanwhile, as illustrated in FIG. 10 to FIG. 11, the electrospinning apparatus's(1') case(102) comprises being conductive, the collector(150) is attached on the case's(102) upper and inner side collector(150), the power supply device's(160) plus terminal is connected to the collector(150), the power supply device's(160) minus terminal is connected to the nozzle block(110) and the case(102).

Here, the case(102) lower side forms an electric conductor material, the upper side forms an electric insulator material, the case(102) upper and inner side the collector(150) is directly meeting and installed. In other words, in the case(102) lower side where the nozzle block(110) is located forms an electric conductor material, the upper side attached the collector(150) forms an electric insulator material, the case(102) upper and inner side forming an electric insulator material the collector(150) is directly meeting and installed.

For this, it is preferable the case(102) lower side forming an electric conductor material and the upper side forming an electric insulator material are mutually connected to form one case(102), but it is not limited to this.

As stated above, the case(102) forms an electric conductor material and an electric insulator material, by forming the case(102) upper side an electric insulator material, it is possible to delete the insulation member(not shown) separately provided for attaching the collector(150) on the case(102) upper and inner side, because of this, the apparatus composition can be streamline.

Here, for an electric insulator material forming the case(102) it is preferable to consist of material with high insulation proficiency, high mechanical strength, and high processability, and it is preferably made of one or a mix selected from the group consisting of polyamide, polyacetal, polycarbonate, modified polyphenylene ether, polybutylene terephthalate, polyethylene terephthalate, amorphous polyarylate, polysulfone, polyether sulfone, polyphenylene sulfide, polyether ether ketone, polyimide, polyethylene imide, fluorocarbon resin, liquid crystal polymer, a polypropylene, high density polyethylene, and polyethylene.

Meanwhile, the thickness and the distance of the case(102) consisting of an insulator material between the case(102) and the collector(150) should satisfy the following condition.

$$(1) \quad a \geq 6mm,$$

$$(2) \quad a+b \geq 50mm$$

In the formula, a is the case thickness forming an electric insulator material, b is distance between the case forming the electric insulator material inner side and the collector outer side. When the condition is satisfied, insulation between the collector(150) and the case(102) is optimized.

Here, in the case of operating an electrospinning apparatus applying 35Kv between the nozzle block(110) and the collector(150), insulation breakdown occurring among the collector(150), the case(102) and other members can be prevented.

Also, leak current can be stopped in a prescribed realm, as a result frequency for stopping operation of the electrospinning apparatus(1") can be decreased to a very low level, because of this, long term consecutive device operation is possible, nanofiber with the required efficience can be stably mass produced.

Not only this, leak current can be stopped in a prescribed realm so it enables supervision in current provided from the power supply device(160), and the electrospinning apparatus(1") problems can be detected early.

Meanwhile, the thickness of case(102) forming an electric insulator material comprises satisfying "a≥8mm". Because of this, in the case of operating an electrospinning apparatus applying 40Kv between the nozzle block(110) and the collector(150), it can prevent insulation breakdown occurring between the collector(150) and the case(102) and other members, and limit leak current in prescribed realm.

Also, the distance between the case(102) forming an electric insulator material inner side and the collector(150) outer side comprises satisfying "a+b≥80mm". Because of this, in the case of operating an electrospinning apparatus applying 40Kv between the nozzle block(110) and the collector(150), it can prevent insulation breakdown occurring between the collector(150) and the case(102) and other members, and limit leak current in prescribed realm.

By the structure stated above, when manufacturing a nanofiber web laminating nanofiber on the elongated sheet(140) from the electrospinning apparatus(1"), the thickness of case(102) forming an electric insulator material and the distance between the case(102) forming an electric insulator material inner side and the collector(150) outer side satisfy the condition, so insulation between the collector(160) and the case(102) and other members is good.

Because of this, in the case of operating an electrospinning apparatus applying 35kV between the nozzle block(110) and the collector(150), insulation breakdown occurred between the collector(150) and the case(102) and other members can be prevented, and leak current can be limited in prescribed realm. According to the structure stated above, the electrospinning apparatus(1") can be operated consecutively in long term, stable mass production of nanofiber with desired efficiency is possible, and the electrospinning apparatus(1) leak current can be stopped in prescribed realm, and the power supply device(160) problem can be detected early.

Moreover, since the electrospinning apparatus(1") progress in electrospinning inside the case(102) made up of temperature 20°C to 40°C, humidity 20% to 60%, electrospinning is possible to maintain leak current in stable low level.

Meanwhile, as illustrated in FIG. 12, the electrospinning apparatus(1'") comprises arranging and installing the bottom-up electrospinning apparatus(410, 410') and the top-down electrospinning apparatus(430, 430') alternatively and consecutively toward horizontal direction.

In this case, the electrospinning apparatus's(1''') bottom-up electrospinning apparatus(410, 410') and the top-down electrospinning apparatus(430, 430') consist of including the spinning solution main tank(19, 49) filling inside polymer spinning solution(not shown), metering pump(not shown) for supplying the required amount of polymer spinning solution filling inside the spinning solution main tank(19, 49), the nozzle block(11, 41) arranged and installed many pieces of the nozzle(12, 42) in pin form which discharges polymer spinning solution inside the spinning solution main tank(19, 49), the collector(13, 43) located on the nozzle(12, 42) lower side and separated in predetermined space from the nozzle(12, 42) for integrating polymer spinning solution jetted, and power supply device(not shown) generating voltage on the collector(13, 43). The electrospinning apparatus(1''') front side from the bottom-up electrospinning apparatus(410, 410') and the top-down electrospinning apparatus(430, 430') is provided with the roller(3) supplying the elongated sheet(15) laminating forming nanofiber(not shown) as polymer spinning solution is jetted, the rear side is provided with the winding roller(5) for winding the elongated sheet(3) laminating forming nanofiber, polymer spinning solution filling inside the electrospinning apparatus's(1''') each of the spinning solution main tank(19, 49) is provided in the required amount consecutively in several nozzle(12, 42) provided high voltage through a metering pump, polymer spinning solution provided to the nozzle(12, 42) is spined and line-focused on the collector(13, 43) with high voltage through the nozzle(12, 42) and forms a nanofiber web, and by embossing and needle punching the formed nanofiber, it is produced to nanofiber non-woven fabric. Meanwhile, the bottom-up electrospinning apparatus(410, 410') and the top-down electrospinning apparatus(430, 430') are each arranged and installed in mutually symmetric in the direction of upper, lower in criteria of the collector(13, 43). In other words, the bottom-up electrospinning apparatus's(410, 410') collector(13, 43) is located on the upper side of the nozzle(12, 42), and the top-down electrospinning apparatus's(430, 430') collector(13, 43) is located on the lower side of the nozzle(12, 42).

Here, the elongated sheet(15) which is laminated polymer spinning solution spinning from the bottom-up electrospinning apparatus(410, 410') and the top-down electrospinning apparatus (430, 430') is preferably comprises non-woven fabric or fabric etc., but it is not limited to this.

According to the structure stated above, polymer spinning solution filled in the bottom-up electrospinning apparatus's(410, 410') spinning solution main tank(19) is jetted on the collector's(13) elongated sheet(15) through the nozzle(12), polymer spinning solution jetted on the collector's(13) elongated sheet(15) is integrated and after formed nanofiber, the elongated sheet(15) laminating formed nanofiber is carried to the top-down electrospinning apparatus's(430, 430') collector(43) through the feed roller(17), polymer spinning solution filled in the electrospinning apparatus's(430, 430') spinning solution main tank(49) on the elongated sheet(15) laminated nanofiber carried on the collector(43) is jetted through the nozzle(42) etc., the bottom-up electrospinning apparatus(410, 410') and the top-down electrospinning apparatus(430, 430') are alternatively consecutively arranged and installed, and the process stated above is consecutively repeatedly carried out and the final product is manufactured.

In the embodiment, the electrospinning apparatus(1''') front side is provided with the bottom-up electrospinning apparatus(410), the bottom-up electrospinning apparatus(410) rear side is provided with the top-down electrospinning apparatus(430), the bottom-up electrospinning apparatus(410, 410') and the top-down electrospinning apparatus(430, 430') are consecutively arranged and installed in order, the electrospinning apparatus(1''') front side is provided with the top-down electrospinning apparatus(430), the top-down electrospinning apparatus(430) rear side is provided with the bottom-up electrospinning apparatus, the top-down electrospinning apparatus(430, 430') and the bottom-up electrospinning apparatus(410, 410') can be consecutively arranged and installed in order.

Moreover, the electrospinning apparatus(1''') front side is arranged and installed consecutively two or more bottom-up electrospinning apparatus(410, 410'), the rear side is arranged and installed consecutively two or more top-down electrospinning apparatus(430, 430'). Or the electrospinning apparatus(1''') front side is sequentially arranged and installed two or more top-down electrospinning apparatus, the rear side is arranged and installed consecutively two or more bottom-up electrospinning apparatus consecutively in the rear side.

Nanofiber manufactured by going through the electrospinning apparatus's(1") bottom-up electrospinning apparatus(410, 410') and top-down electrospinning apparatus(430, 430') according to the present invention by the structure stated above is jetted polymer spinning solution on the elongated sheet(15) through the bottom-up electrospinning apparatus(410, 410') and the top-down electrospinning appatatus(430, 430') each of the nozzle(12, 42), and on the collector's(13, 43) elongated sheet(15) lower side and upper side laminating formed nanofiber, on the elongated sheet(15) polymer spinning solution jetted form the bottom-up electrospinning apparatus's(410, 410') and the top-down electrospinning apparatus's(430, 430') nozzle(12, 42) is laminated and nanofiber is formed in many layers, and the final nanofiber product is manufactured.

Because of this, nanofiber with thin diameter formed on the elongated sheet(15) lower side by polymer spinning solution jetted from the bottom-up electrospinning apparatus(410) nozzle is laminating formed, nanofiber with thick diameter is formed on the elongated sheet(15) upper side by polymer spinning solution jetted from the top-down electrospinning apparatus. On the elongated sheet(15) lower side and upper side on the lower side and upper side of nanofiber laminating formed with thin diameter and thick diameter, again nanofiber with thin diameter and thick diameter laminating formed by polymer spinning solution jetted from the bottom-up electrospinning apparatus(410') and the top-down electrospinning apparatus(430') each of the nozzle(12, 42). Nanofiber with thin diameter and nanofiber with thick diameter are consecutively laminating formed and the final product is manufactured.

Here, by filling same type of polymer spinning solution is filled in the bottom-up electrospinning apparatus(410, 410') and the top-down electrospinning apparatus(430, 430') each of the spinning solution main tank(19, 49) or by filling different type of spinning solution nanofiber can be manufactured variously according to the feature of nanofiber manufactured through the spinning apparatus(1'''). In other words, polymer spinning solution jetted from the bottom-up spinning apparatus(410, 410') and polymer spinning solution jetted from the top-down electrospinning apparatus(430, 430') can be composed of same type of polymer spinning solution, or it can be made up of different type of polymer spinning solution, jetted on the elongated sheet(15) lower side and upper side, and according to the required feature of nanofiber, it can be manufactured variously.

Meanwhile, it is possible to differ polymer spinning solution filled in the bottom-up electrospinning apparatus's(410, 410') spinning solution main tank(19) from polymer filled in top-down electrospinning apparatus's(430, 430') spinning solution main tank(49), or differ each polymer spinning solution filled in each of the bottom-up electrospinning apparatus's(410, 410') spinning solution main tank(19), and simultaneously differ each polymer spinning solution filled in the top-down electrospinning apparatus's(430, 430') spinning solution main tank(49).

Like this, nanofiber manufactured by the bottom-up electrospinning apparatus(410, 410') and the top-down electrospinning apparatus(430, 430') is laminating formed on the lower, upper side of the elongated sheet(15) laminating by the laminating device(50), the laminating device(50) is located on the electrospinning apparatus(1''') rear side according to the embodiment and performs post process.

In the embodiment, the electrospinning apparatus(1''') rear side is provided with the laminating device(50) and nanofiber is manufactured through the bottom-up electrospinning apparatus(410, 410') and the top-down electrospinning apparatus (430, 430'), on the lower side and upper side is composed of laminating the elongated sheet(15) laminating formed nanofiber, below the laminating device(50) is provided with the supply roller(not shown) which provides base material(not shown), nanofiber laminated base material provided through the supply roller on the lower side of the elongated sheet(15) laminating formed, it is preferably to make up of laminating in many layers through the laminating device(50).

Also, the laminating device(50) upper side is provided with a supply roller(not shown) providing another base material(not shwon), the nanofiber is laminated on the upper side of the elongated sheet(15) laminating formed, it is preferably to make up of laminating in many layers through the laminating device(50).

As stated above, by the electrospinning apparatus(1''') rear side is provided with the laminating device(50), nanofiber laminating only the elongated sheet(15) laminating formed on the upper, lower side, or nanofiber laminating the required base material on the lower side of the elongated sheet(15) laminating formed on the upper, lower side, or nanofiber laminating the required base material on the upper side of the elongated sheet(15) laminating formed on the upper, lower side, or laminating the required base material on the upper, lower side of the elongated sheet(15) laminating formed on the upper, lower side etc., base material can be laminated on the elongated sheet(15) and laminating in many layers.

Below explains the electrospinning apparatus according to the embodiment operation process.

To begin with, the elongated sheet(15) is provided to the bottom-up electrospinning apparatus(410) through the supply roller(5) provided on the front side of the hybrid electrospinning apparatus(1) according to the present invention and located on the lower side of the collector(43). In this case, the power supply device's(not shown) high voltage is occurred on the collector(43) through the nozzle(12), polymer spinning solution filled in the spinning solution main tank(19) on the collector(43) occurred high voltage is jetted through the nozzle block's(11) nozzle.

As stated above, the elongated sheet(15) laminating formed nanofiber on the lower side through the bottom-up electrospinning apparatus(410) is supplied to the top-down electrospinning apparatus(430) and located on the upper side of the collector(37). Also in this case, the power supply device's high voltage is occurred on the collector(13) through the nozzle(42), polymer spinning solution filled in the spinning solution main tank(49) on the collector(13) occurred high voltage is jetted through the nozzle block's(41) nozzle(42).

Here, each of the power supply device occurs high voltage on the collector(13, 43) through the nozzle(12, 42) in the same structure of a general electrospinning apparatus. It is preferable to flow 1kV or more voltage on nozzle (12, 42) for promoting formation of nanofiber by electric force and the nozzle block(11, 41) lower side collector(13, 43), and more preferably flow 20kV or more voltage.

As stated above, the elongated sheet(15) is carried to the bottom-up electrospinning apparatus(410, 410') and the top-down electrospinning apparatus(430, 430') arranged and installed alternatively and consecutively toward horizontal direction, by repeating the process of laminating forming nanofiber on the lower side and upper side, nanofiber is laminating formed on the elongated sheet(15) in many layers.

Because of this, on the elongated sheet (15) lower side by polymer spinning solution jetted from the bottom-up electrospinninng apparatus's(410, 410') nozzle(12) nanofiber with thin diameter is repeatedly laminating formed, and on the elongated sheet upper side by polymer spinning solution jetted from the top-down electrospinning apparatus's(430, 430') nozzle nanofiber with thick diameter is repeatedly laminating formed, as nanofiber with thin diameter and nanofiber with thick diameter are repeatedly laminating formed the final product is manufactured.

Meanwhile, by filling different type of polymer spinning solution in the bottom-up electrospinning apparatus(410, 410') and the top-down electrospinning apparatus(430, 430') each of the spinning solution main tank(19, 49) and jetted on the elongated sheet(15) lower side and upper side, according to the required feature of nanofiber, it can be manufactured variously.

As stated above, through the electrospinning apparatus(1''') including the bottom-up electrospinning apparatus(410, 410') and the top-down electrospinning apparatus(430, 430') arranged and installed alternatively and consecutively toward horizontal direction, the elongated sheet laminating formed nanofiber in many layers on the lower side and the upper side wound by the winding roller(5), and by embossing or needle punching produced nanofiber, it manufactures non-woven fabric.

Here, nanofiber manufactured by the bottom-up electrospinning apparatus(410, 410') and the top-down electrospinning apparatus(430, 430') laminating the elongated sheet(15) laminating formed on the lower, upper side to the laminating device(50) and performs post process, it is preferably through the laminating device(50) nanofiber laminating the elongated sheet(15) laminating formed on the upper, lower side, or nanofiber laminating base material required only on the lower side of the elongated sheet laminating formed on the upper, lower side, or nanofiber laminating base material required only on the upper side of the elongated sheet(3) laminating formed on the upper, lower side, or nanofiber laminating base material required both on the upper, lower side of the elongated sheet(15) laminating formed on the upper, lower side etc., by laminating base material on the elongated sheet(15) in many layers, it is preferable to produce the final product.

In addition, the electrospinning apparatus(1''') is possible to be provided with the air permeability measuring device for measuring problem of nanofiber's air permeability, etc. and separate processing device for other post process.

Meanwhile, as illustrated in FIG. 13 to FIG. 20, the electrospinning apparatus(1) rear side is possible to be provided with the filter medium manufacture device(530) for manufacturing nanofiber to a filter medium. In other words, in the electrospinning apparatus(1) the filter medium manufacture device(530) for manufacturing the produced nanofiber(27) to the filter medium(539) by post process is provided in the rear side of the electrospinning apparatus(1).

The composition and operation of the electrospinning apparatus(1) are explained above in detail so below leaves out the explanation. Below, the filter medium manufacture device(530) provided in the rear side of the electrospinning apparatus(1) for post process is explained in detail.

The filter medium manufacture device(530) is for manufacturing produced nanofiber(27) to the filter medium(39) through each of the unit (10, 10') and it comprises a pair of press roller(531a, 531a') located movable on each of the nanofiber(27) upper and lower side.

In this case, the pair of press roller (531a, 531a') peripheral edge in circumferential direction the projection(533a, 533a') is protruded separately in predetermined space, the projection(533a, 533a') protruded on each of the press roller(531a, 531a') during rotating it is tooth-combined.

As stated above, by the projection(533a, 533a') protruded on a pair of the press roller(531a, 531a') peripheral edge during each of the press roller(531a, 531a') rotating, on inserted nanofiber(27) corrugation(539a) is formed. In other words, the projection(533a, 533a') protruded on a pair of the press roller(531a, 531a') peripheral edge is each comprises tooth-combined, when injecting the nanofiber(27) between a pair of press roller(531a, 531a'), each of the press roller(531a, 531a') is rotated, corrugation(539a) is consecutively formed in the nanofiber's(27) length direction, and the filter medium is manufactured.

Here, it is preferable that the projection(533a, 533a') formed on a pair of the press roller(531a, 531a') peripheral edge in circumferential direction is formed in triangle form, by the projection(533a, 533a') formed in triangle form, during the press roller(531a, 531a') rotation, corrugation(539a) folded in wave form on the nanofiber(27) is formed.

Meanwhile, a pair of the press roller(531a, 531a') is preferably comprising movable, during only the nanofiber(27) manufacture through the electrospinning apparatus(1), it is preferably moved to nanofiber upper, lower side, and forms corrugation(539a) on the nanofiber(27).

In this case, a pair of the press roller(531a, 531a') is preferably comprising fixing corrugation(539a) formed through the projection on the nanofiber(27) inserted through a heating roller, separate heating device and steam device, etc. are provided in each of the press roller(531a, 531a') one side and it is possible to fix the corrugation (539a) formed on the nanofiber(27).

For this, a pair of the press roller(531a, 531a') is preferably composed of heating roller with temperature range from 50°C to 200°C, but it is not limited to this.

Here, it is preferably to comprise variously adjustable depth and interval of the corrugation(539a) formed on the nanofiber(27).

In the embodiment according to the present invention, the filter medium manufacture device(530) comprises one pair of the press roller(531a, 531a'), the projection(533a, 533a') formed in triangle form on a pair of the press roller (531a, 531a') peripheral edge is separate in circumferential direction in predetermined space and protruding formed, as illustrated in FIG. 15, in peripheral edge of a pair of the press roller(531b, 531b'), it is possible to protruding formed the projection(533b, 533b') in trapezoid form, in peripheral edge of a pair of the press roller(531c, 531c'), it is possible to protruding formed the projection(533c, 533c') in wave form, and in peripheral edge of a pair of the press roller(531d, 531d'), it is possible to protruding formed the projection(533d, 533d') in quadrangle form.

In the embodiment according to the present invention, a pair of the press roller(531a, 531a', 531b, 531b', 531c, 531c', 531d, 531d') peripheral edge protruding formed the projection(533a, 533a', 533b, 533b', 533c, 533c', 533d, 533d') in triangle form, trapezoid form, wave form or quadrangle form in circumferential direction, a pair of the press roller (531a, 531a', 531b, 531b', 531c, 531c', 531d, 531d') peripheral edge protruding formed projection(533a, 533a', 533b, 533b', 533c, 533c', 533d, 533d') is not limited to this.

Here, the projection(533b, 533b', 533c, 533c', 533d, 533d') in trapezoid form, wave form or quadrangle form are preferably composed of movable one pair of the press roller(531b, 531b', 531c, 531c', 531d, 531d') protruding formed in circumferential direction. Also, it is preferably to fix the corrugation(539a) formed through projection on the nanofiber(27) made up of and inserted by a heating roller.

According to the structure stated above, the nanofiber(27) inserted between a pair of the press roller(531b, 531b', 531c, 531c', 531d, 531d') forms the corrugation(539a) in trapezoid form or wave form or quadrangle form.

Meanwhile, as illustrated in FIG. 16, the filter medium manufacture device(530) located on the rear side of the electrospinning apparatus's(1) unit(10') is sequentially provided with movable one pair of the press roller(531a, 531a', 531b, 531b', 531c, 531c', 531d, 531d') protruding formed the projection(533a, 533a', 533b, 533b', 533c, 533c', 533d, 533d') in triangle form, trapezoid form, wave form and quadrangle form in circumferential direction. The press roller(531a, 531a', 531b, 531b', 531c, 531c', 531d, 531d') suitable to the required product is moved to the nanofiber(27) upper, lower side and rotated, it is possible to form the corrugation(539a) in particular form on the nanofiber(27).

In other words, the filter medium manufacture device(530) is provided with a pair of the press roller (531a, 531a', 531b, 531b', 531c, 531c', 531d, 531d') protruding formed the projection (533a, 533a', 533b, 533b', 533c, 533c', 533d, 533d') in triangle form, trapezoid form, wave form and quadrangle form in circumferential direction, regularly or irregularly consecutively and at least more than one movable. A pair of press roller(531a, 531a') including the projection(533a, 533a') in triangle form suitable to the required product is moved to the nanofiber(27) upper, lower side and rotated, or a pair of press roller(531b, 531b') with the projection(533b, 533b') in trapezoid from is moved to the nanofiber(27) upper, lower side and rotated, or a pair of press roller (531c, 531c') with the projection(533c, 533c') in wave from is moved to the nanofiber(27) upper, lower side and rotated, or a pair of press roller(531d, 531d') with the projection(533d, 533d') in quadrangle from is moved to the nanofiber(27) upper, lower side and rotated, and it is possible to manufacture the filter medium(539) with the corrugation(539a) in required form.

Meanwhile, in the embodiment according to the present invention, the filter medium manufacture device(530) is composed of a pair of the press roller(531a, 531a', 531b, 531b', 531c, 531c', 531d, 531d'), in peripheral edge of each of the press roller(531a, 531a', 531b, 531b', 531c, 531c', 531d, 531d') protruding formed the projection(533a, 533a', 533b, 533b', 533c, 533c', 533d, 533d') in triangle form, trapezoid form, wave form or quadrangle form in circumferential direction, and on inserted nanofiber(27) corrugation(539a) in triangle form, trapezoid form, wave form or quadrangle form is formed.

As illustrated in FIG. 17 TO FIG. 18, the filter medium manufacture device(530) comprises the upper, lower side press(535a, 535a'), on the upper press(535a) and the lower press(535b), the projection(537a, 537a') in triangle form is each formed tooth-combined, by press of the upper, lower side press(535a, 535a'), on the nanofiber(27) inserted between the upper, lower side press(535a, 535a') is possible to comprise forming the corrugation(539a) in triangle form.

Also, in the embodiment, on the lower side and upper side of the upper side press(535b, 535c, 535d) and the lower side press(535b',535c',535d'), the projection(537b, 537b', 537c, 537c', 537d, 537d') in trapezoid form, wave form or quadrangle form are each formed enables to tooth-combined. Also, it is possible to form the corrugation(539a) in trapezoid form, wave form, or quadrangle form on the nanofiber(27) inserted by press of the upper, lower side press(535b, 535b', 535c, 535c', 535d, 535d').

Also, as illustrated in FIG. 19, the upper, lower side press(535a, 535a', 535b, 535b', 535c, 535c', 535d, 535d') forming possible to tooth-combined the projection(537a, 537a', 537b, 537b', 537c, 537c', 537d, 537d') in triangle form, trapezoid form, wave form and quadrangle form are provided in order. The press (535a, 535a', 535b, 535b', 535c, 535c', 535d, 535d') suitable to the required product press the nanofiber(27) upper, lower side, and it is possible to form the corrugation(539a) in particular form on the nanofiber(27).

In the embodiment, the upper, lower side press(535a, 535a', 535b, 535b', 535c, 535c', 535d, 535d') comprises heating press which enables heating, on the nanofiber(27) inserted and located between the upper, lower side press(535a, 535a', 535b, 535b', 535c, 535c', 535d, 535d'), it is preferable to fix the corrugation(539a) formed through the projection(537a, 537a', 537b, 537b', 537c, 537c', 537d, 537d').

In this case, the upper, lower side press (535a, 535a', 535b, 535b', 535c, 535c', 535d, 535d') is preferably composed of heating press with temperature range from 50°C to 200°C, but it is not limited to this.

Below explains the manufacture process according to the embodiment in the filter medium manufacture device reference to FIG. 20.

To begin with, through the roller(3) provided on the front side of the electrospinning apparatus(1), the elongated sheet (not shown) is supplied to each of the unit (10, 10') of the electrospinning apparatus(1), on the elongated sheet through the nozzle(12), polymer spinning solution is electro spin(S10).

As stated above, among each of the unit(10, 10') of the electrospinning apparatus(1) in the unit(10) located on the front side, the elongated sheet(15) laminated the nanofiber(27) is carried to the unit (10) located on the front side to the unit(10') located on the rear side by the feed roller (17) operated by the motor(not shown) driving and the belt(16) driving by the feed roller(17) rotation, the process stated above is repeated, and on elongated sheet(15) the nanofiber(27) is laminating formed and produced(S20).

Like this, by going through each of the unit (10, 10') of the electrospinning apparatus(1), the elongated sheet electro spun nanofiber performs post process such as laminating, etc., and manufactures the final product.

Meanwhile, in the case of manufacturing the filter medium(539) by the nanofiber(27) produced going through each of the unit(10, 10') of the electrospinning apparatus(1), the nanofiber(27) manufactured through each of the unit(10, 10') of the electrospinning apparatus(1) is inserted to the filter medium manufacture device(530) provided in the rear side of the rear side unit(10') among each of the unit (10, 10')(S30). Like this, the nanofiber(27) inserted to the filter medium manufacture device(530), goes through the filter medium manufacture device(530) and corrugation(539a) is formed(S40). Here, in the case of manufacturing the filter medium(539) by the nanofiber(27) produced electrospinning through each of the unit (10, 10') of the electrospinning apparatus(1), a pair of the press roller(531a, 531a') is moved enables to tooth-combined to the nanofiber(27) upper, lower side, each of the press roller(531a, 531a') is tooth-combined and rotates in the same direction of the nanofiber(27) entry, the nanofiber(27) presses on the projection(533a, 533a') protruding formed on each of the press roller(531a, 531a') peripheral edge in circumferential direction and the corrugation(539a) is formed.

In this case, a pair of the press roller(531a, 531a') fixes the corrugation (539a) formed on the nanofiber(27) made up of and inserted by a heating roller. In the embodiment, a pair of the press roller(531a, 531a') comprises a heating roller and fixes the corrugation(539a) formed on the nanofiber(27), it is possible to comprise each of the press roller(531a, 531a') provided with separate heating device or steam device and fix the corrugation(539a) formed on the nanofiber(27).

According to the structure stated above, on the nanofiber(27) inserted between a pair of the press roller(531a, 531a'), in peripheral edge of each of the press roller(531b, 531b') projection (533a, 533a') form protruding formed separately in predetermined space and corresponded form of the corrugation(539a) is formed.

In this case, a pair of the press roller(531a, 531a') is composed of heating roller with temperature range from 50°C to 200°C, on the nanofiber(27) the corrugation(539a) form corresponding to the projection(533a, 533a') form is formed.

Here, in the case of the projection(533a, 533a') in triangle form protruding formed in peripheral edge of a pair of the press roller(531a, 531a'), on the nanofiber(27) inserted between a pair of the press roller(531a, 531a'), the corrugation (539a) in triangle form corresponding to this is formed, in the case of the projection (533b, 533b') formed in trapezoid form protruding formed in peripheral edge of a pair of the press roller(531b, 531b'), on the nanofiber(27) inserted between a pair of the press roller(531b, 531b'), the corrugation(539a) in trapezoid form corresponding to this is formed. In the case of the projection (533c, 533c') is formed in wave form protruding formed in peripheral edge of a pair of the press roller(531c, 531c'), on the nanofiber(27) inserted between a pair of the press roller (531c, 531c'), the corrugation(539a) in wave form corresponding to this is formed, in the case of the projection(533d, 533d') in quadrangle form protruding formed in peripheral edge of a pair of the press roller(531d, 531d'), on the nanofiber(27) inserted between a pair of the press roller(531d, 531d'), the corrugation(539a) in quadrangle form corresponding to this is formed.

In the embodiment, a pair of the press roller's (531a, 531a', 531b, 531b', 531c, 531c', 531d, 531d') peripheral edge in circumferential direction protruding formed projection(533a, 533a', 533b, 533b', 533c, 533c', 533d, 533d') is formed in triangle form, trapezoid form, wave form ,and quadrangle form. If a pair of the press roller's (531a, 531a', 531b, 531b', 531c, 531c', 531d, 531d') peripheral edge protruding formed and on the nanofiber(27) the corrugation(539a) is easily formed, a pair of the press roller(531a, 531a', 531b, 531b', 531c, 531c', 531d, 531d') peripheral edge protruding formed projection form enables to be formed in other various ways. Also if the filter medium(539) in the form of required in the field manufacture is possible, the projection(533a, 533a', 533b, 533b', 533c, 533c', 533d, 533d') form can be transformed variously. Meanwhile, among the electrospinning apparatus's(1) each unit (10, 10'), the rear side of the unit (10') located in the rear side, the projection(533a, 533a', 533b, 533b', 533c, 533c', 533d, 533d') in triangle form, trapezoid form, wave form and quadrangle form in peripheral edge in circumferential direction protruding formed a pair of the press roller(531a, 531a', 531b, 531b', 531c, 531c', 531d, 531d') is each provided movably and in sequence. In the required filter medium's(539) corrugation(539a), a pair of the press roller(531a, 531a', 531b, 531b', 531c, 531c', 531d, 531d') having the projection (533a, 533a', 533b, 533b', 533c, 533c', 533d, 533d') with appropriate form is selectively moved to the nanofiber (27) upper, lower side and meets the upper, lower side of the inserted nanofiber(27), tooth-combined, and rotated, etc.. To be appropriate to the field situation and demanding products, among a pair of the press roller(531a, 531a', 531b, 531b', 531c, 531c', 531d') having various forms of the projection(533a, 533a', 533b, 533b', 533c, 533c', 533d, 533d'), a pair of the press roller(531a, 531a', 531b, 531b', 531c, 531c', 531d, 531d') having selected form of projection is moved to the nanofiber(27) upper, lower side, forms the corrugation(539a) with particular form on the nanofiber(27), and enables to manufacture the filter medium(539).

Through the electrospinning apparatus (1) according to the structure stated above manufactured nanofiber(27) selectively forms the corrugation(539a) in triangle form, trapezoid form, wave form or quadrangle form, it is possible to manufacture the filtermedium(539) appropriate in the field requiring situation, and it can perform comprehensive manufacture process.

Meanwhile, in the case that the upper, lower side press(535a, 535a') are provided in the filter medium manufacture device(530), by pressing the upper, lower side of the nanofiber (27) manufactured in the electrospinning apparatus(1), the filter medium(539) formed the corrugation (539a) can be produced. In other words, after the filter medium is manufactured in the electrospinning apparatus(539), in the case of comprising the upper, lower side press(535a, 535a') each provided in the carried nanofiber(27) upper, lower side, the upper, lower side press(5351, 5351') are moved in the downward direction and the upward direction, by pressing the upper, lower side of the nanofiber(27) manufactured from the electrospinning apparatus(1) and carried, on the nanofiber(27) the corrugation(539a) is formed, and the filter medium is produced(S43).

Here, formed in each of the upper, lower side of the upper, lower side press(535a, 535a'), by the projection(537a, 537a') formed tooth-combined when the nanofiber(27) is pressed to the upper, lower side of the press(535a, 535a'), the corrugation(539a) is formed on the nanofiber (27).

Also in this case, the upper, lower press(535a, 535a') comprise a heating press which enables heating, it is preferably comprising fixing the corrugation(539a) formed through the projection(537a, 537a') in the nanofiber(27), it is possible to fix the corrugation(539a) formed in the nanofiber(27) in the upper, lower press(535a, 535a') provided with a separate heating device or a steam device.

Here, the upper, lower heating press(535a, 535a') comprise a heating press having temperature range from 50°C to 200°C, and in the nanofiber the corrugation (539a) corresponding to the projection(537a, 537a') form is formed.

Here, in the case of in the upper, lower press (535a, 535a') upper lower side forms the projection (537a, 537a') in triangle form, in the nanofiber(27) inserted between the upper, lower press(535a, 535a') the filter medium(539) having the corrugation (539a) in triangle form corresponding to this is formed, in the case of the projection(537b, 537b') in trapezoid form is formed, in the nanofiber(27) inserted between the upper, lower press(535b, 535b') the filter medium(539) having the corrugation(539a) in trapezoid form corresponding to this is formed. If the projection(537c, 537c') in wave form is formed, in the nanofiber(27) inserted between the upper, lower press(35c, 35c') the filter medium(539) having the corrugation(539a) in wave form corresponding to this is formed, and if the projection (537d, 537d') in quadrangle form is formed, in the nanofiber(27) inserted between the upper, lower press(35d, 35d') the filter medium(539) having the corrugation(539a) in wave form corresponding to this is formed. In the embodiment, the upper, lower press(535a, 535a', 535b, 535b', 535c, 535c', 535d, 535d') upper, lower side formed the projection(537a, 537a', 537b, 537b', 537c, 537c', 537d, 537d') in triangle form, trapezoid form, wave form and quadrangle form, but if the filter medium(539) in the form of required in the field manufacture is possible, the projection(537a, 537a', 537b, 537b', 537c, 537c', 537d, 537d') form can be transformed variously in other forms.

Meanwhile, among the electrospinning apparatus(1) each of the unit (10, 10'), the rear side of the unit (10') located in the rear side as the filter medium manufacture device(530), the projection(537a, 537a', 537b, 537b', 537c, 537c', 537d, 537d') in triangle form, trapezoid form, wave form and quadrangle form and the upper, lower press(535a, 535a', 535b, 535b', 535c, 535c', 535d, 535d') formed in the lower, upper side are each provided in order. Also the upper, lower press(535a, 535a', 535b, 535b', 535c, 535c', 535d, 535d') having the projection(537a, 537a', 537b, 537b', 537c, 537c', 537d, 537d') in appropriate form in the required filter medium's(539) corrugation (539a) form selectively press the nanofiber(27) upper, lower side, etc.. To be appropriate to the field situation and demanding products, among the upper, lower press(535a, 535a', 535b, 535b', 535c, 535c', 535d, 535d') having the projection(537a, 537a', 537b, 537b', 537c, 537c', 537d, 537d') in various forms, the upper, lower press(535a, 535a', 535b, 535b', 535c, 535c', 535d, 535d') having selected form of the projection(537a, 537a', 537b, 537b', 537c, 537c', 537d, 537d'), on the nanofiber(27) the corrugation(539a) is formed and the filter medium(539) manufacture is possible. Through the electrospinning apparatus (1) according to the structure manufactured nanofiber(27) selectively forms the corrugation(539a) in triangle form, trapezoid form, wave form, or quadrangle form, it enables to manufacture the filter medium(539) appropriate to the situation required in the field, and performs comprehensive manufacture process.

Thus, through the electrospinning apparatus(1) electro spin and manufactured nanofiber (27) goes through post process such as laminating and produces non-woven fabric, or forms the corrugation(539a) on the filter medium manufacture device(530) and produces the filter medium(539)(S50).

As stated above, on the nanofiber(27) manufactured through the electrospinning apparatus(1) forms the corrugation(539a) by the filter medium manufacture device(530), the filter medium's(539) filtering area is enlarged and increased, the filter medium(539) flow rate is increased, simultaneously the filter medium(539) performance is increased, and thus the filter medium(539) longevity is increased.

Moreover, in the electrospinning apparatus(1) the nanofiber manufacture process and the filter medium manufacture process are unified, after the nanfiber manufacture according to electrospinning, through the post process, on the nanofiber(27) the corrugation(539a) is formed and manufactures the filter medium(539), and the nanofiber manufacture and the filter medium manufacture are consecutively in progress, simultaneously through one process the nanofiber(27) or the filter medium(539) selective manufacture is possible, and this increases the manufacture process, decreases product unit cost, and enables to obtain the filter medium(539)'s enhanced filtering area.

While this invention has been described in connection with what is presently considered to be practical exemplary embodiments, it is to be understood that the invention is not limited to the disclosed embodiments, on the contrary, is intended to cover carious modifications and equivalent arrangements included within the spirit and scope of the appended claims.

**Claims**

1. An electrospinning apparatus for production of nanofibers, comprising:

   a VOC(Volatile Organic Compounds) recycling system for reusing and recycling by condensing and distilling VOC which occurs from spinning solution jetting through nozzle installed in each unit of the electrospinning apparatus.

2. The electrospinning apparatus according to claim 1, wherein the VOC recycling system comprises a condenser for condensing and liquefying VOC, a distiller for distilling and liquefying VOC which is condensed and liquefied through the condenser, and a solvent storage device for storing liquefied solvent from the distiller.

3. The electrospinning apparatus according to claim 2, wherein a pipe for flowing an evaporated VOC occurred in the unit of the electrospinning apparatus to the condenser, a pipe for flowing a liquefied VOC occurred in the condenser to the distiller, and a pipe for carrying a liquefied VOC occurred in the distiller to the solvent storage device are provided with connected each other.

4. The electrospinning apparatus according to claim 3, wherein VOC distilled in the distiller and liquefying by the evaporation temperature difference is classified by each solvent types and is stored in a storage tank in which each solvent is reused and recycled as a spinning solution of the electrospinning apparatus.

5. An electrospinning apparatus for production of nanofibers, comprising:

   an overflow system which retrieves spinning solution which is not nanofiberized from spinning solution spun through a nozzle installed in each unit of the electrospinning apparatus and reuses and recycles the spinning solution as a raw material of nanofibers; and
   a VOC recycling system which reuses and recycles VOC occurred in electrospinning process by condensation and distillation,
   wherein the overflow system and the VOC recycling system are connected and simultaneously operated.

6. The electrospinning apparatus according to claim 5, wherein tip of the nozzle is formed in divergent form.

7. The electrospinning apparatus according to claim 5, wherein the overflow system comprises a spinning solution return path for retrieving nanofiber that is not nanofiberized, a storage tank for storing spinning solution which becomes raw material of the nanofiber, a recycling tank for recycling and storaging spinning solution carried through first feed pipe and is provided with at least one or more, a middle tank for storing spinning solution carried through second feed pipe from the storage tank or the recycling tank, wherein the VOC recycling tank comprises a condenser for condensing and liquefying VOC and a solvent storage device for storing VOC condensed through the condenser.

8. The electrospinning apparatus according to claim 7, wherein the VOC recycling system further comprises a distiller is located between the condenser and the solvent storage device and is for supplying liquefied VOC to the solvent storage device after distilling and liquefying VOC condensed through the condenser.

9. The electrospinning apparatus according to claim 7, wherein the recycling tank has first sensor for measuring level of the retrieved spinning solution, and first feed control device which controls carrying movement of the first feed pipe according to level measured by the first sensor,

the middle tank has second sensor for measuring level of the spinning solution, and second feed control device which controls carrying movement of the second feed pipe according to level measured by the second sensor.

10. The electrospinning apparatus according to claim 9, wherein the recycling tank of the overflow system retrieves spinning solution and simultaneously measures solvent contents of the retrieved spinning solution, and according to the result of measurement, after distillation in the distiller of the VOC recycling system after distillation by the evaporation temperature difference, retrieves VOC solvent liquefied by the evaporation temperature difference, and adds the the required amount of VOC solvent to the recycling tank so that the VOC solvent is reused and recycled.

11. An electrospinning apparatus comprising a case with conductivity, a collector attached to the case through an insulating member, a nozzle block with a plurality of nozzles which discharge polymer spinning solution and is opposed to the collector, a power supply device applying voltage between the nozzle block and the collector, of which one of plus terminal and minus terminal of the power supply device is connected to the collector, and the other is connected to the nozzle block and the case, so that product nanofibers through electrospinning, comprising:

lower side of the case is formed with an electric conduction material, the upper side thereof is formed with an electric insulation material, and the upper inner side of the case is directly engaged with the collector, in which the thickness of the case and the distance between the inner side of the case and the outer side of the collector satisfy the below conditions (1) and (2).

(1) a≥6mm, a is the thickness of the case formed with an electric insulation material,
(2) a+b≥50mm, b is distance between inner side of the case formed with the electric insulation material and the outer side of the collector.

12. The electrospinning apparatus according to claim 11, wherein a satisfies a≥8mm.

13. The electrospinning apparatus according to claim 11, wherein a and b satisfy a+b≥80mm.

14. The electrospinning apparatus according to claim 11, wherein the electric insulation material forming the case is any one or more selected from the group comprising polyamide, polyacetal, polycarbonate, modified polyphenylene ether, polybutyleneterephtalate, polyethyleneterephthalate, amorphous polyallylate, polysulfone, polyethersulfone, polyphenylene sulfide, polyetheretherketone, polyimide, polyetherimide, fluoride resin, liquid crystal polymer, polypropylene, high density polyethylene, and polyethylene.

15. An hybrid electrospinning apparatus for production of nanofibers, comprising:

a bottom-up electrospinning apparatus of which a collector occurring high voltage is located on upper side of nozzle; and a top-down electrospinning apparatus of which a collector occurring high voltage is located on lower side of nozzle, wherein the bottom-up electrospinning apparatus and the top-down electrospinning apparatus are installed alternatively and consecutively in horizontal direction.

16. The hybrid electrospinning apparatus according to claim 15,
wherein after the nanofibers are laminated on the lower side of elongated sheet on the collector by polymer spinning solution jetting from nozzle of the bottom-up electrospinning apparatus, the nanofibers are carried to the collector of the top-down electrospinning apparatus, and then the nanofibers are laminated on the upper side of elongated sheet by polymer spinning solution jetting from nozzle of the top-down electrospinning apparatus, and the process stated above is consecutively and repeatedly performed.

17. The hybrid electrospinning apparatus according to claim 16,
wherein the nanofibers with thin diameter formed by polymer solution jetting from the bottom-up electrospinning apparatus and the nanofibers with thick diameter formed by polymer solution jetting from the top-down electrospinning apparatus are consecutively and repeatedly laminated on both lower and upper sides of the elongated sheet.

18. The hybrid electrospinning apparatus according to claim 16,
wherein the polymer spinning solution jetting from nozzle of the bottom-up electrospinning apparatus and the polymer spinning solution jetting from nozzle of the top-down electrospinning apparatus are the same kinds or two or more different kinds.

19. An electrospinning apparatus for production of nanofibers, comporising:

a filter medium manufacture device is located in the rear side of the electrospinning apparatus and produces a filter medium by forming of corrugation on nanofiber produced by electro spinning.

20. The electrospinning apparatus according to claim 19,
wherein the filter medium manufacture device is provided movably in each of the upper and lower side of the nanofiber, and the filter medium manufacture device comprises a pair of press roller composed of heating roller.

21. The electrospinning apparatus according to claim 20,
wherein the pair of the press roller is formed with tooth shape-projections in predetermined spaced in circumferential direction on peripheral edge, and the projections are formed with any one of among triangle, trapezoid, wave, or quadrangle form.

22. The electrospinning apparatus according to claim 19,
wherein the filter medium manufacture device is provided in the upper and lower sides of the nanofiber, and comprises upper and lower presses composed of heating press.

23. The electrospinning apparatus according to claim 22,
wherein the upper and lower presses are formed with mutually engageable protrusions in the lower and upper sides thereof, and the projections are formed with any one of among triangle, trapezoid, wave, or quadrangle form.

24. A manufacturing process of filter medium using a filter medium manufacture device of electrospinning apparatus for production of nanofibers, comprising of steps:

step of electro spinning a spinning solution on elongated sheet locating on the upper side of the collector through nozzle in inside of each unit of the electrospinning apparatus (S10);
step of producing nanofiber by laminating the electro spun spinning solution thereon(S20);
step of inputting the nanofiber to the filter medium manufacture device(S30);
step of forming corrugation on nanofiber inputted to the filter medium manufacture device(S40); and
step of producing the filter medium by outputting the corrugated nanofiber(S50).

25. The manufacturing process of filter medium according to claim 24,

wherein, in the case that the filter medium manufacture device is provided movably in the upper and lower sides of nanofiber and comprising a pair of press roller protruding with formed projection in peripheral edge,
the manufacturing process further comprises step of forming corrugation that when the nanofiber is inputting, a pair of press rollers comprising a heating roller is rotated and tooth-engaged with projection formed on peripheral edge, so that forms consecutively the corrugation in the length direction of nanofiber(S41).

26. The manufacturing process of filter medium according to claim 24,
wherein, in the case that the filter medium manufacture device is provided comperessably in the upper and lower sides of nanofiber and comprising of upper and lower presses protruding with formed projection in upper and lower sides,
the manufacturing process further comprises step of forming corrugation that when the nanofiber is inputting, upper and lower presses press and engage with the upper and lower sides of nanofiber comprising of a heating press, so that forms consecutively the corrugation in the length direction of nanofiber(S43).

FIG.1

FIG.2

310

FIG.3

**320**

324

323

322

321

325

FIG.4

FIG.5

FIG. 6

EP 2 966 197 A1

FIG.7

```
┌─────────────────────────────────┐
│    Step of condensing the evaporated │
│                VOC               │
└─────────────────────────────────┘
                 │
                 ▼
┌─────────────────────────────────┐
│    Step of distilling the liquefied VOC │
└─────────────────────────────────┘
                 │
                 ▼
┌─────────────────────────────────┐
│     Step of discharging each of the │
│     evaporated and liquefied VOC by │
│     classifying by each solvent kinds │
└─────────────────────────────────┘
                 │
                 ▼
┌─────────────────────────────────┐
│    Step of storing the VOC by classifying │
│           by solvent kinds       │
└─────────────────────────────────┘
                 │
                 ▼
┌─────────────────────────────────┐
│    Step of reusing and recycling the VOC by │
│    adding the classified and storaged VOC by │
│    each solvent kinds into the spinning solution │
└─────────────────────────────────┘
```

FIG.8

FIG.9

FIG.10

FIG.11

FIG.12

EP 2 966 197 A1

FIG.13

FIG.14

EP 2 966 197 A1

FIG. 15

FIG.16

FIG.17

FIG.18

FIG.19

FIG.20

```
┌─────────────────────────┐
│  Step of electro spinning a │⌐ S10
│     spinning solution    │
└─────────────────────────┘
            │
            ▼
┌─────────────────────────┐
│  Step of producing nanofiber │⌐ S20
└─────────────────────────┘
            │
            ▼
┌─────────────────────────┐
│    Step of inputting the    │⌐ S30
│        nanofiber        │
└─────────────────────────┘
            │
            ▼
┌─────────────────────────┐
│  Step of forming corrugation │⌐ S40
│      on nanofiber       │
└─────────────────────────┘
```

| Step of forming corrugation by a pair of press rollers | Step of producing the filter medium | Step of forming corrugation by upper and lower presses |
|---|---|---|
| S41 | S50 | S43 |

| | INTERNATIONAL SEARCH REPORT | International application No. |
|---|---|---|
| | | **PCT/KR2014/001586** |

**A.   CLASSIFICATION OF SUBJECT MATTER**

*D01D 5/00(2006.01)i, D01F 13/00(2006.01)i, D01D 4/00(2006.01)i, D01D 13/00(2006.01)i*

According to International Patent Classification (IPC) or to both national classification and IPC

**B.   FIELDS SEARCHED**

Minimum documentation searched (classification system followed by classification symbols)

D01D 5/00; H01M 10/0525; B82Y 40/00; B01D 39/00; H01M 4/13; B01D 39/14; B01D 69/00; B82Y 30/00; D01F 13/00; D01D 4/00; D01D 13/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: electrospinning or field emission

**C.   DOCUMENTS CONSIDERED TO BE RELEVANT**

| Category* | Citation of document, with indication, where appropriate, of the relevant passages | Relevant to claim No. |
|---|---|---|
| Y | KR 10-0702866 B1 (INDUSTRIAL COOPERATION FOUNDATION CHONBUK NATIONAL UNIVERSITY) 03 April 2007 | 15-18 |
| A | See abstract, paragraphs [0028]-[0046], figure 1 | 1-14,19-26 |
| Y | KR 10-2012-0024856 A (AMPRIUS, INC.) 14 March 2012 | 15-18 |
| | See abstract, paragraphs [0094]-[0113], figures 11 to 12 | |
| A | | 1-14,19-26 |
| Y | KR 10-2012-0002491 A (AMOGREENTECH CO., LTD.) 05 January 2012 | 19-26 |
| | See abstract, paragraphs [0062]-[0100], figures 1 to 4 | |
| A | | 1-18 |
| Y | KR 10-2008-0081834 A (BHA ALTAIR, LLC et al.) 10 September 2008 | 19-26 |
| | See abstract, paragraphs [0014]-[0020], figures 1 to 3 | |
| A | | 1-18 |
| A | KR 10-1087389 B1 (SHINSHU UNIVERSITY et al.) 25 November 2011 | 1-26 |
| | See abstract, claims 1 to 13, figures 1 to 7 | |
| A | KR 10-1040063 B1 (SHINSHU UNIVERSITY et al.) 09 June 2011 | 1-26 |
| | See abstract, claims 1 to 19, figures 1 to 30 | |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 JUNE 2014 (25.06.2014) | **26 JUNE 2014 (26.06.2014)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/001586**

| Patent document cited in search report | Publication date | Patent family member | Publication date |
|---|---|---|---|
| KR 10-0702866 B1 | 03/04/2007 | NONE | |
| KR 10-2012-0024856 A | 14/03/2012 | CN 102449815 A | 09/05/2012 |
| | | CN 102576857 A | 11/07/2012 |
| | | EP 2436068 A2 | 04/04/2012 |
| | | EP 2436069 A2 | 04/04/2012 |
| | | JP 2012-528463 A | 12/11/2012 |
| | | JP 2012-528464 A | 12/11/2012 |
| | | KR 10-2012-0024855 A | 14/03/2012 |
| | | US 2010-0330419 A1 | 30/12/2010 |
| | | US 2010-0330421 A1 | 30/12/2010 |
| | | US 2010-0330423 A1 | 30/12/2010 |
| | | US 8450012 B2 | 28/05/2013 |
| | | WO 2010-138617 A2 | 02/12/2010 |
| | | WO 2010-138617 A3 | 31/03/2011 |
| | | WO 2010-138619 A2 | 02/12/2010 |
| | | WO 2010-138619 A3 | 31/03/2011 |
| KR 10-2012-0002491 A | 05/01/2012 | EP 2589422 A2 | 08/05/2013 |
| | | JP 2013-535314 A | 12/09/2013 |
| | | WO 2012-002754 A2 | 05/01/2012 |
| | | WO 2012-002754 A3 | 03/05/2012 |
| KR 10-2008-0081834 A | 10/09/2008 | CN 101352632 A | 28/01/2009 |
| | | CN 101637681 A | 03/02/2010 |
| | | CN 101637681 B | 12/03/2014 |
| | | CN 101670210 A | 17/03/2010 |
| | | EP 1970111 A1 | 17/09/2008 |
| | | EP 1970111 B1 | 21/07/2010 |
| | | EP 2161065 A1 | 10/03/2010 |
| | | EP 2161065 B1 | 10/10/2012 |
| | | GB 2462192 A | 03/02/2010 |
| | | US 2008-0217241 A1 | 11/09/2008 |
| | | US 2008-0314011 A1 | 25/12/2008 |
| | | US 2008-0315464 A1 | 25/12/2008 |
| | | US 7927540 B2 | 19/04/2011 |
| | | US 7942948 B2 | 17/05/2011 |
| KR 10-1087389 B1 | 25/11/2011 | JP 2012-122153 A | 28/06/2012 |
| | | WO 2012-077871 A1 | 14/06/2012 |
| KR 10-1040063 B1 | 09/06/2011 | CN 103370457 A | 23/10/2013 |
| | | EP 2650410 A1 | 16/10/2013 |
| | | JP 2012-122154 A | 28/06/2012 |
| | | US 2013-0273190 A1 | 17/10/2013 |
| | | WO 2012-077872 A1 | 14/06/2012 |

Form PCT/ISA/210 (patent family annex) (July 2009)

**INTERNATIONAL SEARCH REPORT**

International application No.

**PCT/KR2014/001586**

| Box No. II Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III Observations where unity of invention is lacking (Continuation of item 3 of first sheet) |

This International Searching Authority found multiple inventions in this international application, as follows:

The International Searching Authority found multiple groups of inventions, as follows:
1. The invention of group 1 : claims 1 to 10 pertain to an electrospinning device including a VOC recycling system capable of reusing and recycling VOC generated in a spinning process by condensation and distillation,
2. The invention of group 2 : claims 11 to 14 pertain to an electrospinning device including a case of which lower part is an electric conductor and an upper part is an insulating material, a nozzle block, a collector, and a voltage supply device,
3. The invention of group 3 : claims 15 to 18 pertain to an electrospinning device wherein a upward electrospinning device and a downward electrospinning device are arranged and installed alternatively and consecutively in a horizontal direction,
4. The invention of group 4 : claims 19 to 26 pertain to an electrospinning device including a filter media manufacturing device manufacturing filter media by forming a wrinkle part on a nanofiber manufactured by electrospinning, and a filter media manufacturing method.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (July 2009)